(19) Europäisches Patentamt
European Patent Office
Office européen des brevets

(11) **EP 4 358 273 A1**

(12) **EUROPEAN PATENT APPLICATION**
published in accordance with Art. 153(4) EPC

(43) Date of publication:
24.04.2024 Bulletin 2024/17

(21) Application number: 22867391.9

(22) Date of filing: 07.09.2022

(51) International Patent Classification (IPC):
*H01M 50/489* (2021.01)   *H01G 11/52* (2013.01)
*H01M 50/414* (2021.01)   *H01M 50/434* (2021.01)
*H01M 50/437* (2021.01)   *H01M 50/443* (2021.01)
*H01M 50/446* (2021.01)   *H01M 50/449* (2021.01)
*H01M 50/451* (2021.01)   *H01M 50/457* (2021.01)
*H01M 50/463* (2021.01)

(52) Cooperative Patent Classification (CPC):
H01G 11/52; H01M 50/414; H01M 50/434;
H01M 50/437; H01M 50/443; H01M 50/446;
H01M 50/449; H01M 50/451; H01M 50/457;
H01M 50/463; H01M 50/489; Y02E 60/10

(86) International application number:
PCT/JP2022/033624

(87) International publication number:
WO 2023/038069 (16.03.2023 Gazette 2023/11)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 07.09.2021 JP 2021145739

(71) Applicant: Asahi Kasei Kabushiki Kaisha
Tokyo 1000006 (JP)

(72) Inventor: NAKAGAWA, Yoshitaka
Tokyo 100-0006 (JP)

(74) Representative: dompatent von Kreisler Selting
Werner -
Partnerschaft von Patent- und Rechtsanwälten
mbB
Deichmannhaus am Dom
Bahnhofsvorplatz 1
50667 Köln (DE)

(54) **SEPARATOR FOR POWER STORAGE DEVICE**

(57) Provided is a separator for a power storage device, said separator comprising a substrate and a thermoplastic polymer-containing layer that is formed on at least one substrate surface of the substrate and contains a thermoplastic polymer, wherein the thermoplastic polymer-containing layer has a dot pattern, the dot diameter (a) of 20 μm to 1,000 μm, the inter-dot distance (b) is 100 μm to 3,000 μm, the dot diameter (a) and the inter-dot distance (b) satisfy the relationship expressed by the expression: [inter-dot distance] / [dot diameter] = 0.5 to 4, and the contact angle between the thermoplastic polymer-containing layer and an electrolyte is 0° to 20°.

FIG. 1

(a)   (b)

EP 4 358 273 A1

**Description**

FIELD

The present invention relates to a separator for a power storage device.

BACKGROUND

Power storage devices such as nonaqueous electrolyte batteries have been undergoing active development in recent years. Nonaqueous electrolyte batteries such as lithium ion batteries usually have a microporous membrane provided as a separator between positive and negative electrodes. Such separators have the function of preventing direct contact between the positive and negative electrodes, while also allowing ions to pass through the electrolyte solution that is held in the micropores.

A separator must exhibit conventionally required safety features including rapid termination of battery reaction upon abnormal heating (fuse characteristic), and shape maintenance even at high temperatures to prevent the danger of the positive electrode substance and negative electrode substance undergoing direct reaction (short circuit characteristic), as well as increased adhesiveness with the electrodes from the viewpoint of obtaining uniform charge-discharge current and suppressing lithium dendrites.

In addition to safety and adhesiveness with the electrodes, microporous membranes have also been studied with coated or layered functional layers to impart various functions to the separators (PTLs 1 to 6).

For example, PTL 1 describes forming a thermoplastic polymer-containing layer in a dot pattern on at least one side of a microporous membrane as the separator substrate, and adjusting the dot diameters and dot distance, from the viewpoint of handleability and adhesiveness when the battery is wound, and improved lithium ion permeability.

PTL 2 describes coating a separator substrate with an inorganic particle-containing porous layer in a dot pattern, and adjusting the average diameter of the dots and the dot distance, in order to improve the situation in which electrodes become separated from a porous coating layer-provided separator, and inorganic particles in the porous coating layer become dissociated.

PTL 3 focuses on technology for improving absorption of the electrolyte solution into the electrodes when using an adhesive separator in a battery, by allowing the electrolyte solution to permeate to the center section of the positive electrode or negative electrode, but when referring to dot pattern coating of an adhesive layer onto the separator substrate, the publication only mentions the maximum dot diameter and the dot arrangement pitch.

PTL 4 describes a secondary battery having a separator with an adhesive layer coated over the entire porous substrate, wherein the separator has an acrylate-based adhesive layer formed on at least one side of the porous substrate from the viewpoint of inhibiting increase in resistance inside the secondary battery, and it shows the dot pattern of the adhesive layer in the drawing and also specifies the dot distance.

PTL 5 and PTL 6 describe forming an acrylate-based pressure-sensitive adhesive layer with numerous dots arranged at prescribed spacings on the surface of a porous coating layer having inorganic particles in the porous coating layer, from the viewpoint of inhibiting reduction in binding force between the electrodes and the separator, and they also give examples for the average diameters of the dots.

[CITATION LIST]

[PATENT LITERATURE]

[PTL 1] International Patent Publication No. WO2014/017651
[PTL 2] Japanese Patent Public Inspection No. 2011-512005
[PTL 3] International Patent Publication No. WO2020/067208
[PTL 4] Japanese Patent Public Inspection No. 2018-535534
[PTL 5] Japanese Unexamined Patent Publication No. 2015-99777
[PTL 6] Japanese Unexamined Patent Publication No. 2015-99776

SUMMARY

[TECHNICAL PROBLEM]

When a separator that includes a microporous membrane as the separator substrate and an adhesive layer coated or layered on at least one side of the microporous membrane is used for cell assembly of a power storage device, the injection property may become impaired during the electrolyte injection step.

However, in a conventional separator for a power storage device comprising a microporous membrane as the substrate and an adhesive layer formed in a dot pattern on the substrate, improvement in the adhesive force with the electrodes and improvement in the injectability of the electrolyte solution are in a trade-off relationship, making it difficult to achieve both.

It is an object of the present invention to provide a separator for a power storage device that can exhibit both adhesion and injectability, as well as a power storage device comprising the same.

[SOLUTION TO PROBLEM]

As a result of much research, the present inventors have elucidated factors determining injectability for coating or lamination of a thermoplastic polymer-containing layer on a substrate, and have found that the problem described above can be solved by specifying the dot pattern of the thermoplastic polymer-containing layer. Specifically, the present invention is as follows.

[1] A separator for a power storage device comprising a substrate and a thermoplastic polymer-containing layer which is formed on the substrate surface of at least one side of the substrate and includes a thermoplastic polymer, wherein:

the thermoplastic polymer-containing layer has a dot pattern,
the dot diameter is 20 $\mu$m to 1,000 $\mu$m,
the dot distance is 100 $\mu$m to 3,000 $\mu$m,
the dot diameter and the dot distance satisfy the relationship represented by the following formula:

Dot distance/dot diameter ratio = 0.5 to 4, and
a contact angle between the thermoplastic polymer-containing layer and an electrolyte solution is 0° to 20°.

[2] The separator for a power storage device according to aspect [1] above, wherein the average dot height is 0.2 $\mu$m to 10 $\mu$m.

[3] The separator for a power storage device according to aspect [1] or [2] above, wherein a total coverage area ratio of the thermoplastic polymer-containing layer on the substrate surface is 5% to 55%.

[4] The separator for a power storage device according to any one of aspects [1] to [3] above, wherein a basis weight per side of the thermoplastic polymer-containing layer is 0.03 g/m$^2$ to 0.3 g/m$^2$.

[5] The separator for a power storage device according to any one of aspects [1] to [4] above, wherein a mean particle diameter of the thermoplastic polymer is 0.1 $\mu$m to 2.0 $\mu$m.

[6] The separator for a power storage device according to any one of aspects [1] to [5] above, wherein the thermoplastic polymer has at least two glass transition temperatures, at least one of the glass transition temperatures being in the range of below 20°C, and at least one of the glass transition temperatures being in the range of 40°C to 110°C.

[7] The separator for a power storage device according to any one of aspects [1] to [6] above, which has an asymmetrical multilayer structure in terms of the substrate.

[8] The separator for a power storage device according to any one of aspects [1] to [7] above, wherein the thermoplastic polymer-containing layer is present on both sides of the substrate, and a porous layer comprising an inorganic filler and a resin binder is formed between one side of the substrate and the thermoplastic polymer-containing layer.

[9] A power storage device comprising a positive electrode, a negative electrode, the separator for a power storage device according to aspect [8] above, and a nonaqueous electrolyte solution, wherein the separator for a power storage device is disposed in such a manner that, in terms of the substrate, the side with the porous layer and the positive electrode face each other.

[10] A power storage device comprising a positive electrode, a negative electrode, the separator for a power storage device according to any one of aspects [1] to [8] above and a nonaqueous electrolyte solution.

[ADVANTAGEOUS EFFECTS OF INVENTION]

According to the invention it is possible to provide a separator for a power storage device that can exhibit both adhesion and injectability, as well as a power storage device comprising the same.

BRIEF DESCRIPTION OF DRAWINGS

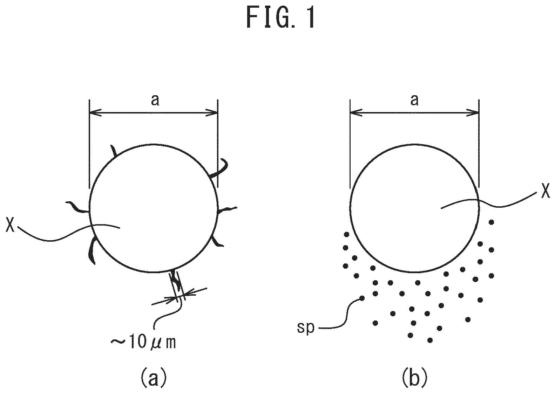

Fig. 1 is a pair of plan-view diagrams schematically illustrating dot diameters and dot distances according to one embodiment of the invention, Fig. 1(a) showing a pattern excluding regions with dimensions of 10 $\mu$m or smaller, and Fig. 1(b) showing the region where the thermoplastic polymer is continuously present, and the particle scattering region.

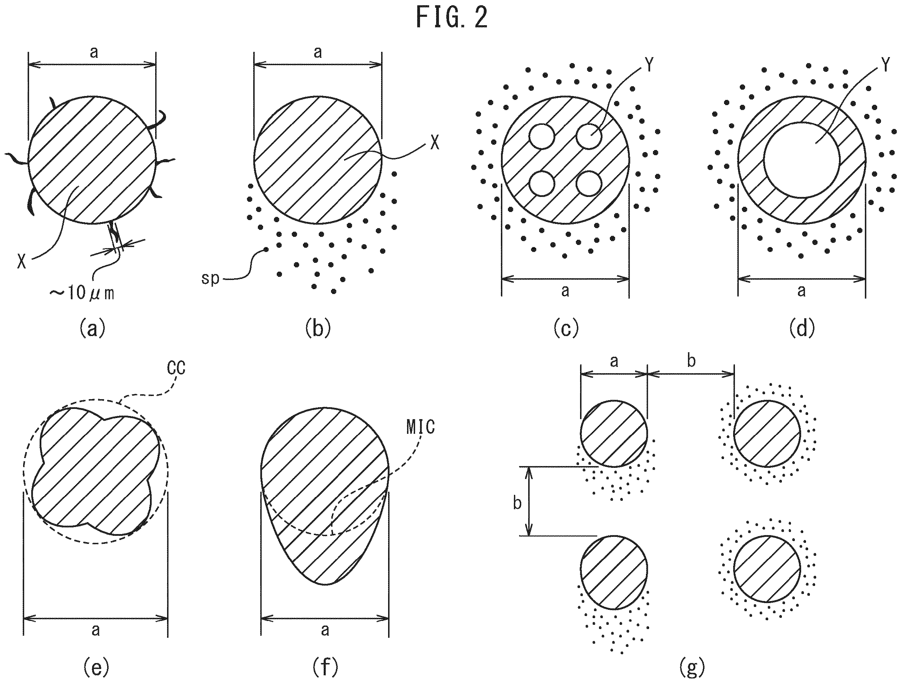

Fig. 2 is set of schematic plan views showing continuous thermoplastic polymer regions, for illustration of dot diameter and dot distance according to one embodiment of the invention, Fig. 2(a) showing a pattern excluding regions of dimensions of 10 $\mu$m or smaller, Fig. 2(b) showing the continuous thermoplastic polymer region and the particle scattering region, Fig. 2(c) and (d) showing the continuous thermoplastic polymer region, the thermoplastic polymer-free region and the particle scattering region, Fig. 2(e) showing a clover-shaped pattern, Fig. 2(f) showing teardrop tailing of a dot, and Fig. 2(g) showing the distances between multiple dots.

DESCRIPTION OF EMBODIMENTS

An embodiment for carrying out the invention (hereunder referred to as "the embodiment") will now be explained in detail. It is to be understood, incidentally, that the invention is not limited to the embodiment described below and may incorporate various modifications within the scope of the gist thereof.

<Separator for power storage device>

The separator for a power storage device according to the embodiment (hereunder also referred to simply as "separator") comprises:

a substrate, and
a thermoplastic polymer-containing layer which is formed on the substrate surface of at least one side of the substrate and includes a thermoplastic polymer,
wherein the thermoplastic polymer-containing layer has a specified dot pattern.

The separator may have the thermoplastic polymer-containing layer on the substrate surface of one or both sides of the substrate, and if desired it may also have a porous layer between the substrate surface and the thermoplastic polymer-containing layer, or on the substrate surface where the thermoplastic polymer-containing layer is not formed.

(Dot pattern of thermoplastic polymer-containing layer)

The thermoplastic polymer-containing layer of the embodiment has a dot pattern, the dot diameter being 20 $\mu$m to 1,000 $\mu$m, the dot distance being 100 $\mu$m to 3,000 $\mu$m, and the dot diameter and dot distance satisfying the relationship represented by the following formula:
Dot distance/dot diameter = 0.5 to 4.
The dots are portions including the thermoplastic polymer and portions lacking the thermoplastic polymer on the polyolefin microporous membrane, the portions including the thermoplastic polymer being present as islands. The thermoplastic polymer-containing portions of the thermoplastic polymer-containing layer may also be independent.
For this embodiment, the dot pattern of the thermoplastic polymer-containing layer was optimized so as to satisfy the following inequalities:

20 $\mu$m $\leq$ dot diameter $\leq$ 1,000 $\mu$m
100 $\mu$m $\leq$ dot distance $\leq$ 3,000 $\mu$m
0.5 $\leq$ dot distance/dot diameter $\leq$ 4,

in order to improve adhesion efficiency with the electrodes, resulting in a separator having adhesive force (adhesive force with the electrodes) at least on the level of the prior art while reducing inhibition of permeability of the electrolyte solution, and exhibiting improved wettability, such that both adhesion and injectability were achieved. Since the separator exhibits both adhesion and injectability, it also contributes to productivity of power storage devices comprising the separator.
The injectability referred to herein is the ease of permeation of the electrolyte solution into the electrodes and separator in the electrolyte injection step during cell assembly of a power storage device using the separator, and it is represented as how short the period of time is from the start of injection until complete permeation.

With no intention to be limited to any particular theory, it is thought that for cell assembly of a power storage device using a separator comprising a thermoplastic polymer-containing layer laminated or coated on a substrate surface, the factors responsible for injectability are represented in the following Lucas-Washburn formula:

[Mathematical Formula 1]

$$l(t) = \sqrt{\frac{\gamma r \cos\theta t}{2\mu}}$$

{where:

1: penetration distance
$\gamma$: surface tension
r: capillary diameter
$\theta$: contact angle
t: time
$\mu$: viscosity}.

When the Lucas-Washburn formula is applied to a separator of the embodiment, it is thought that the $\gamma$ (surface tension) or $\mu$ (viscosity) value is largely dependent on the electrolyte solution, the r (capillary diameter) value is characterized by the separator, and the contact angle ($\theta$) is characterized by the wettability of the separator and/or electrodes. More specifically, the following two factors were found to affect injectability:

· the dot distance in the thermoplastic polymer-containing layer and/or the distance between the separator and the electrodes;
· the wettability of the separator and electrodes.

If the viscosity of the electrolyte solution is 0.1 mPa·s to 10 mP.s, or the surface tension of the electrolyte solution is in the range of 20 mN/m to 50 mN/m, then the injectability will be a particular issue, and using the separator of this embodiment for an electrolyte solution with physical properties in this range will be able to provide excellent injectability for the cell as a whole.

For this embodiment, if the dot pattern in the thermoplastic polymer-containing layer has the dot diameters, the dot distances and the dot distance/dot diameter ratio optimized within the aforementioned ranges, it will be possible to improve the injectability of the power storage device cell as a whole because in terms of the Lucas-Washburn formula, the dot distance and/or the distance between the separator and the electrodes will be increased, thus increasing r (capillary diameter), the wettability of the separator will be increased, thus increasing the contact angle ($\theta$), and the 1 (penetration distance), which corresponds to the electrolyte penetration between the separator and electrodes, will be larger.

From the viewpoint of achieving both adhesion and injectability and increasing the penetration distance as explained above, the dot diameter in the thermoplastic polymer-containing layer is preferably 20 $\mu$m to 1000 $\mu$m, more preferably 50 $\mu$m to 800 $\mu$m, even more preferably 100 $\mu$m to 700 $\mu$m, yet more preferably 145 $\mu$m to 600 $\mu$m and most preferably 150 $\mu$m to 600 $\mu$m.

From the viewpoint of ensuring permeation flow paths for the electrolyte solution by adequately ensuring gaps between multiple dots, and also providing satisfactory air leakage, the dot distance in the thermoplastic polymer-containing layer is preferably 100 $\mu$m to 3000 $\mu$m, more preferably 200 $\mu$m to 2500 $\mu$m, even more preferably 400 $\mu$m to 2000 $\mu$m, and yet more preferably 501 $\mu$m to 1500 $\mu$m.

From the viewpoint of obtaining an excellent balance between adhesive force with the electrodes and injectability of the electrolyte solution, the dot distance/dot diameter ratio in the thermoplastic polymer-containing layer is preferably 0.5 to 4, more preferably 0.7 to 3.8, even more preferably 1 to 3.5, yet more preferably in the range of 1.3 to 3.5, and most preferably 2 to 3.3.

From the viewpoint of the distance between the separator and electrodes and the wettability of the separator, the average dot height for the dot pattern in the thermoplastic polymer-containing layer is preferably 0.2 $\mu$m to 10 $\mu$m, more preferably 0.5 $\mu$m to 10 $\mu$m, even more preferably 1.0 $\mu$m to 10 $\mu$m, yet more preferably 0.5 $\mu$m to 4 $\mu$m, even

yet more preferably 1.0 μm to 4 μm, especially preferably 0.5 μm to 3 μm and most preferably 1 μm to 3 μm.

From the viewpoint of obtaining satisfactory air leakage, the positioning angle of the dots in the thermoplastic polymer-containing layer is preferably smaller than 40°, and while the lower limit for the positioning angle is not particularly restricted it may be 0° or greater, for example.

In the dot pattern of the thermoplastic polymer-containing layer, the rate of change in the dot distance before and after permeation of the electrolyte solution through the separator is preferably 0% to 20% and more preferably 0% to 10%. The balance between adhesion and injectability will tend to be superior if the rate of change in the dot distance before and after immersion of the electrolyte solution into the separator is within this range.

The specified dot pattern in the thermoplastic polymer-containing layer can be achieved, for example, by optimizing the thermoplastic polymer-containing coating solution, adjusting the polymer concentration of the coating solution or the coating amount, coating method or coating conditions, or modifying the printing plate, in the separator production process.

The constituent elements of the separator of the embodiment will now be described.

[Thermoplastic polymer-containing layer]

The thermoplastic polymer-containing layer of the embodiment includes a thermoplastic polymer.

[Contact angle between thermoplastic polymer-containing layer and electrolyte solution]

From the viewpoint of excellent injectability of the electrolyte solution, resistance to pooling of air and a shorter injection time, the contact angle of the thermoplastic polymer-containing layer with the electrolyte solution is preferably 0° to 20°, more preferably 2° to 18° and even more preferably 4° to 16°. The contact angle of the thermoplastic polymer-containing layer with the electrolyte solution is preferably measured on the side of the thermoplastic polymer-containing layer on which the dot pattern is formed.

The contact angle of the thermoplastic polymer-containing layer with the electrolyte solution can be adjusted to within the range specified above by, for example, controlling the total coverage area ratio of the thermoplastic polymer-containing layer on the substrate surface, the particle diameter of the thermoplastic polymer, the strength of corona treatment on the substrate surface, the drying speed, the coating material viscosity and the coating material pH, during the process of forming the thermoplastic polymer-containing layer.

(Thermoplastic polymer)

The thermoplastic polymer used for the embodiment is not particularly restricted, and examples include polyolefin resins such as polyethylene, polypropylene and α-polyolefin; fluorine-containing resins such as polyvinylidene fluoride and polytetrafluoroethylene and copolymers comprising them; diene-based polymers having conjugated dienes such as butadiene or isoprene as monomer units, or copolymers and hydrides comprising them; acrylic polymers having acrylic acid esters or methacrylic acid esters as monomer units, or their copolymers or hydrides; rubber compounds such as ethylene-propylene rubber, polyvinyl alcohol and vinyl polyacetate; cellulose derivatives such as ethyl cellulose, methyl cellulose, hydroxyethyl cellulose and carboxymethyl cellulose; and resins having a melting point and/or glass transition temperature of 180°C or higher, such as polyphenylene ether, polysulfone, polyethersulfone, polyphenylene sulfide, polyetherimide, polyamideimide, polyamide and polyester compounds, and their blends. Monomers to be used for synthesis of thermoplastic polymers include monomers having one or more groups selected from the group consisting of hydroxyl, sulfonic acid, carboxyl, amide, and cyano groups.

Preferred among these thermoplastic polymers are diene-based polymers, acrylic polymers and fluorine-based polymers, for their superior bondability with electrode active materials and superior strength or flexibility.

(Diene-based polymers)

Diene-based polymers are not particularly restricted, and examples include polymers that include monomer units obtained by polymerization of conjugated dienes having two conjugated double bonds, such as butadiene or isoprene. Conjugated diene monomers are not particularly restricted, and examples include 1,3-butadiene, isoprene, 2,3-dimethyl-1,3-butadiene, 2-phenyl-1,3-butadiene, 1,3-pentadiene, 2-methyl-1,3-pentadiene, 1,3-hexadiene, 4,5-diethyl-1,3-octadiene and 3-butyl-1,3-octadiene. Any of these may be polymerized alone or, they may be copolymerized.

The proportion of a monomer unit obtained by polymerization of a conjugated diene in the diene-based polymer is not particularly restricted, but it may be 40 weight% or greater, preferably 50 weight% or greater and more preferably 60 weight% or greater of the total diene-based polymer.

The diene-based polymer is not particularly restricted, and examples include homopolymers of conjugated dienes such as polybutadiene and polyisoprene, and copolymers with monomers that are copolymerizable with conjugated dienes. Such a copolymerizable monomer is not particularly restricted, and may be any of the (meth)acrylate monomers or monomers mentioned below, hereinafter referred to as "other monomers".

The "other monomers" are not particularly restricted, and examples include $\alpha,\beta$-unsaturated nitrile compounds such as acrylonitrile and methacrylonitrile; unsaturated carboxylic acids such as acrylic acid, methacrylic acid, itaconic acid and fumaric acid; styrene-based monomers such as styrene, chlorostyrene, vinyltoluene, t-butylstyrene, vinylbenzoic acid, methyl vinylbenzoate, vinylnaphthalene, chloromethylstyrene, hydroxymethylstyrene, $\alpha$-methylstyrene and divinylbenzene; olefins such as ethylene and propylene; halogen atom-containing monomers such as vinyl chloride and vinylidene chloride; vinyl esters such as vinyl acetate, vinyl propionate, vinyl butyrate and vinyl benzoate; vinyl ethers such as methyl vinyl ether, ethyl vinyl ether and butyl vinyl ether; vinyl ketones such as methyl vinyl ketone, ethyl vinyl ketone, butyl vinyl ketone, hexyl vinyl ketone and isopropenyl vinyl ketone; heterocyclic ring-containing vinyl compounds such as N-vinylpyrrolidone, vinylpyridine and vinylimidazole; acrylic acid ester and/or methacrylic acid ester compounds such as methyl acrylate and methyl methacrylate; hydroxyalkyl group-containing compounds such as $\beta$-hydroxyethyl acrylate and $\beta$-hydroxyethyl methacrylate; and amide-based monomers such as acrylamide, N-methylolacrylamide and acrylamide-2-methylpropanesulfonic acid, any one of which may be used alone or in combinations of two or more.

(Acrylic polymers)

Acrylic polymers are not particularly restricted, but are preferably polymers including a monomer unit obtained by polymerization of a (meth)acrylate monomer.

Throughout the present specification, "(meth)acrylic acid" means "acrylic acid or methacrylic acid", and "(meth)acrylate" means "acrylate or methacrylate".

(Meth)acrylate monomers are not particularly restricted, and examples include alkyl (meth)acrylates such as methyl (meth)acrylate, ethyl (meth)acrylate, n-propyl (meth)acrylate, isopropyl (meth)acrylate, n-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, nonyl (meth)acrylate, decyl (meth)acrylate, lauryl (meth)acrylate, n-tetradecyl (meth)acrylate and stearyl (meth)acrylate; hydroxyl group-containing (meth)acrylates such as hydroxyethyl (meth)acrylate, hydroxypropyl (meth)acrylate and hydroxybutyl (meth)acrylate; amino group-containing (meth)acrylates such as aminoethyl (meth)acrylate; and epoxy group-containing (meth)acrylates such as glycidyl (meth)acrylate.

The proportion of a monomer unit obtained by polymerization of a (meth)acrylate monomer is not particularly restricted, but it may be, for example, 40 weight% or greater, preferably 50 weight% or greater and more preferably 60 weight% or greater of the total acrylic polymer. Acrylic polymers include homopolymers of (meth)acrylate monomers, and copolymers with monomers that are copolymerizable with them. Such copolymerizable monomers include the "other monomers" mentioned above for diene-based polymers, any of which may be used alone or in combinations of two or more.

(Fluorine-based polymers)

Fluorine-based polymers are not particularly restricted, and examples include vinylidene fluoride homopolymers, and copolymers of monomers that are copolymerizable with them. Fluorine-based polymers are preferred from the viewpoint of electrochemical stability.

The proportion of a monomer unit obtained by polymerization of vinylidene fluoride is not particularly restricted, but it may be, for example, 40 weight% or greater, preferably 50 weight% or greater and more preferably 60 weight% or greater. Monomers that are copolymerizable with vinylidene fluoride are not particularly restricted, and examples include fluorine-containing ethylenic unsaturated compounds such as vinyl fluoride, tetrafluoroethylene, trifluorochloroethylene, hexafluoropropylene, hexafluoroisobutylene, perfluoroacrylic acid, perfluoromethacrylic acid, and fluoroalkyl esters of acrylic acid or methacrylic acid; non-fluorinated ethylenic unsaturated compounds such as cyclohexyl vinyl ether and hydroxyethyl vinyl ether; and non-fluorinated diene compounds such as butadiene, isoprene and chloroprene.

Of these fluorine-based polymers, homopolymers of vinylidene fluoride, vinylidene fluoride/tetrafluoroethylene copolymer and vinylidene fluoride/tetrafluoroethylene/hexafluoropropylene copolymer are preferred. Vinylidene fluoride/tetrafluoroethylene/hexafluoropropylene copolymer is an especially preferred fluorine-based polymer, the monomer composition usually being 30 to 90 weight% vinylidene fluoride, 50 to 9 weight% tetrafluoroethylene and 20 to 1 weight% hexafluoropropylene. Particles of such fluorine resins may be used alone or in combinations of two or more different types.

Monomers to be used for synthesis of thermoplastic polymers include monomers with hydroxyl, carboxyl, amino, sulfonic acid, amide or cyano groups.

Monomers with hydroxyl groups are not particularly restricted, and may be vinyl-based monomers, such as pentenol.

Monomers with carboxyl groups are also not particularly restricted, and examples include vinyl-based monomers such as unsaturated carboxylic acids or pentenoic acids having ethylenic double bonds, such as (meth)acrylic acid or itaconic acid.

Monomers with amino groups are not particularly restricted, and include 2-aminoethyl methacrylate, for example.

Monomers with sulfonic acid groups are not particularly restricted, and examples include vinylsulfonic acid, methylvinylsulfonic acid, (meth)allylsulfonic acid, styrenesulfonic acid, ethyl (meth)acrylate-2-sulfonate, 2-acrylamide-2-methylpropanesulfonic acid and 3-allyloxy-2-hydroxypropanesulfonic acid.

Monomers with amide groups are not particularly restricted, and examples include acrylamide, methacrylamide, N-methylolacrylamide and N-methylolmethacrylamide.

Monomers with cyano groups are not particularly restricted, and examples include acrylonitrile, methacrylonitrile, $\alpha$-chloroacrylonitrile and $\alpha$-cyanoethyl acrylate.

The thermoplastic polymer to be used for the embodiment may be one polymer alone or a blend of two or more polymers, but it preferably includes two or more different polymers. The thermoplastic polymer may also be used together with a solvent, the solvent being one that can uniformly and stably disperse the thermoplastic polymer, such as N-methylpyrrolidone, N,N-dimethylformamide, N,N-dimethyl acetamide, water, ethanol, toluene, hot xylene, methylene chloride or hexane, with aqueous solvents being preferred among these. The thermoplastic polymer may also be used in the form of a latex.

(Glass transition point of thermoplastic polymer)

From the viewpoint of exhibiting adhesive force between the separator and electrodes, while also ensuring proper distance between the electrodes and separator in the power storage device and shortening the electrolyte solution injection time, the thermoplastic polymer preferably has thermal properties with at least two glass transition temperatures, at least one of the glass transition temperatures being in the range of lower than 20°C, and at least one of the glass transition temperatures being in the range of 40°C to 110°C.

The glass transition temperature is determined from a DSC curve obtained by differential scanning calorimetry (DSC). The glass transition temperature may also be referred to herein as "Tg".

Specifically, it is determined by the intersection between a straight line extending the low-temperature end baseline in the DSC curve toward the high-temperature end, and the tangent line at the inflection point in the stepwise change region of glass transition. More specifically, it may be determined with reference to the method described in the Examples.

The "glass transition" refers to the value when a change in heat quantity accompanying the change in state of a polymer test piece in DSC occurs at the endothermic end. Such a change in heat quantity is observed as a stepwise change in the DSC curve, or a combination of a stepwise change and a peak.

A "stepwise change" is a portion of the DSC curve that moves away from the previous baseline and toward a new baseline. This also includes any combination of a peak and stepwise change.

The "inflection point" is the point at which the slope of the DSC curve is maximum in the stepwise change region. In the stepwise change region, this represents the point where the upwardly convex curve changes to a downwardly convex curve.

The term "peak" refers to a portion of the DSC curve that moves away from the baseline and then returns to the same baseline.

The term "baseline" refers to the DSC curve in the temperature zone where no transition or reaction takes place in the test piece.

If at least one glass transition temperature of the thermoplastic polymer used for this embodiment is in the range of lower than 20°C, the adhesiveness for substrates such as microporous membranes will be superior, resulting in an effect of excellent adhesiveness between the separator and electrodes. More preferably, at least one glass transition temperature of the thermoplastic polymer used is in the range of 15°C or lower, and even more preferably in the range of -30°C to 15°C. The glass transition temperature in the range of lower than 20°C is most preferably only in the range of -30°C to 15°C, from the viewpoint of increasing adhesiveness between the thermoplastic polymer and the microporous membrane while also ensuring satisfactory handleability.

If at least one glass transition temperature of the thermoplastic polymer used for the embodiment is in the range of 40°C to 110°C, the adhesion between the separator and electrodes and the handleability will be excellent, and it will be possible to maintain distance between the electrode surface and the separator substrate surface in the power storage device, while also shortening the electrolyte solution injection time. More preferably, at least one of the glass transition temperatures of the thermoplastic polymer used is in the range of 45°C to 100°C, and more preferably in the range of 50°C to 95°C. From the viewpoint of handleability, the Tg is preferably 70°C or higher, so long as the effect of the invention is not impeded.

A thermoplastic polymer with two glass transition temperatures can be obtained, for example, by a method of blending two or more thermoplastic polymers or using a thermoplastic polymer with a core-shell structure, without any limitation to these methods. A core-shell structure means that the polymer has a double structure form, made of a composition in which the polymer belonging to the core portion and the polymer belonging to the shell portion are different.

For a polymer blend or core-shell structure, the glass transition temperature of the thermoplastic polymer as a whole can be controlled by combination of a polymer with a high glass transition temperature and a polymer with a low glass transition temperature. Multiple functions can also be imparted to the thermoplastic polymer as a whole. In the case of a blend, for example, both stickiness resistance and wettability with the polyolefin microporous membrane can be obtained with a blend of two or more different types of polymers having a glass transition temperature in the range of 20°C or higher, and a polymer having a glass transition temperature in the range of lower than 20°C. The blending ratio, in the case of a blend, is preferably in the range of 0.1:99.9 to 99.9:0.1, more preferably 5:95 to 95:5, even more preferably 50:50 to 95:5 and yet more preferably 60:40 to 90:10, as the ratio of polymers having a glass transition temperature in the range of 20°C or higher and polymers having a glass transition temperature in the range of lower than 20°C. In the case of a core-shell structure, the adhesion or compatibility with the polyolefin microporous membrane or other materials can be adjusted by changing the outer shell polymer, and increased adhesion for electrodes after hot pressing, for example, can be obtained by modifying the polymer in the center section. The viscoelasticity can be controlled by combination of a polymer with high viscosity and a polymer with high elasticity.

The glass transition temperature of the shell of a thermoplastic polymer comprising a core-shell structure is not particularly restricted, but it is preferably lower than 20°C, more preferably 15°C or lower and even more preferably -30°C to 15°C. The glass transition temperature of the core of a thermoplastic polymer comprising a core-shell structure is also not particularly restricted, but it is preferably 20°C or higher, more preferably 20°C to 120°C and even more preferably 50°C to 120°C.

For this embodiment, the glass transition temperature (Tg) of the thermoplastic polymer can be appropriately adjusted by changing the monomer components used for production of the thermoplastic polymer and the loading proportion of each monomer, for example. Specifically, the Tg for each monomer used for production of the thermoplastic polymer can be roughly estimated from the commonly used Tg for its homopolymer (as listed in the "Polymer Handbook" (a Wiley-Interscience Publication), for example), and the mixing proportion of the monomer. For example, a copolymer with a high Tg can be obtained by blending a high proportion of a monomer such as styrene, methyl methacrylate or acrylonitrile, which yield polymers with Tg of about 100°C. A copolymer with a low Tg can be obtained by blending a high proportion of a monomer such as butadiene which yields a polymer with a Tg of about - 80°C, or n-butyl acrylate or 2-ethylhexyl acrylate which yield polymers with Tg of about -50°C.

The Tg of the polymer can be approximated by the Fox formula (formula (1) below). However, the glass transition point of the thermoplastic polymer used for this embodiment is the value measured by the method using DSC described above.

$$1/\mathrm{Tg} = \mathrm{W}_1/\mathrm{Tg}_1 + \mathrm{W}_2/\mathrm{Tg}_2 + \ldots + \mathrm{W}_i/\mathrm{Tg}_i + \ldots \mathrm{W}_n/\mathrm{Tg}_n \quad (1)$$

{In formula (1), Tg (K) represents the Tg of the copolymer, $\mathrm{Tg}_i$ (K) represents the Tg of a homopolymer of each monomer i, and $\mathrm{W}_i$ represents the mass fraction of each monomer.}

(Structure of thermoplastic polymer-containing layer)

In the thermoplastic polymer-containing layer, preferably a thermoplastic resin having a glass transition temperature of 40°C to 110°C is present on the outer surface side of the separator for a power storage device, and a thermoplastic resin having a glass transition temperature of lower than 20°C is present on the interface side between the polyolefin microporous membrane and the thermoplastic polymer-containing layer. The "outer surface" is the side of the thermoplastic polymer-containing layer that contacts with an electrode when the separator for a power storage device and the electrode are stacked. The "interface" is the side of the thermoplastic polymer-containing layer that contacts with the polyolefin microporous membrane.

If a thermoplastic polymer having a glass transition temperature of 40°C to 110°C is present in the thermoplastic polymer-containing layer on the outer surface side of the separator for a power storage device, the adhesiveness with the microporous membrane will be superior, and adhesiveness between the separator and electrodes will tend to be superior as a result. If a thermoplastic polymer having a glass transition temperature of lower than 20°C is present on the interface side between the polyolefin microporous membrane and the thermoplastic polymer-containing layer, adhesion between the separator and electrodes and the handleability will both tend to be superior. A separator having a thermoplastic polymer-containing layer as described above will tend to have further improved handleability and adhesion between the separator and electrodes.

Such a structure can be obtained as a structure in which the thermoplastic polymer (a) is composed of thermoplastic polymer particles and a binder polymer that binds the thermoplastic polymer particles to the polyolefin microporous membrane with the thermoplastic polymer particles exposed on the surface, the glass transition temperature of the thermoplastic polymer particles is in the range of 40°C to 110°C, and a thermoplastic polymer having a glass transition temperature of lower than 20°C is present on the interface side between the polyolefin microporous membrane and the thermoplastic polymer-containing layer, and/or the thermoplastic polymer (b) has a layered structure, the glass transition temperature of the thermoplastic polymer in the uppermost surface layer when used as a separator, is in the range of 40°C to 110°C, and a thermoplastic polymer having a glass transition temperature of lower than 20°C is present on the interface side between the polyolefin microporous membrane and the thermoplastic polymer-containing layer. The thermoplastic polymer (b) may also have a layered structure of polymers with different Tg values.

(Mean particle diameter of thermoplastic polymer)

The structure of the thermoplastic polymer of the embodiment is not particularly restricted and may be particulate, for example. Such a structure will tend to provide more excellent adhesion between the separator and electrodes and handleability for the separator. The term "particulate" as used herein means that in measurement with a scanning electron microscope (SEM), the individual thermoplastic polymers have borders with shapes such as thin elongated, spherical or polygonal shapes.

The mean particle diameter of the thermoplastic polymer particles is preferably 0.1 $\mu$m to 2.0 $\mu$m, more preferably 0.16 $\mu$m to 1.5 $\mu$m, even more preferably 0.2 $\mu$m to 1.0 $\mu$m and most preferably 0.3 $\mu$m to 0.6 $\mu$m, from the viewpoint of exhibiting adhesive force between the separator and electrodes while maintaining distance between multiple electrodes across the separator, and reducing the contact angle of the separator surface with respect to the electrolyte solution to shorten the injection time for the electrolyte solution into the power storage device.

(Degree of swelling of thermoplastic polymer with electrolyte solution)

From the viewpoint of the cell characteristics such as the cycle characteristic, and also from the viewpoint of the rate of change in the distances between dots before and after immersion of the electrolyte solution in the separator as explained above, the thermoplastic polymer of the embodiment preferably has a property of swelling with the electrolyte solution. The degree of swelling of the thermoplastic polymer with the electrolyte solution is preferably by a factor of at least 2 and no more than 15. The degree of swelling of the thermoplastic polymer with the electrolyte solution can be measured by the method described below for the Examples. The degree of swelling of the thermoplastic polymer of the embodiment with the electrolyte solution can be adjusted, for example, by changing the monomer components to be polymerized and the loading ratio of each monomer.

(Basis weight of thermoplastic polymer-containing layer per side)

In the separator of the embodiment, the basis weight per side of the thermoplastic polymer-containing layer is preferably 0.03 g/m$^2$ to 0.3 g/m$^2$, more preferably 0.04 g/m$^2$ to 0.15 g/m$^2$ and even more preferably 0.06 g/m$^2$ to 0.10 g/m$^2$, from the viewpoint of adhesive force. The basis weight of the thermoplastic polymer-containing layer can be adjusted by changing the polymer concentration of the coating solution or the coating amount of the polymer solution. The preferred range is greater than 0.08 g/m$^2$, so long as the effect of the invention is not impeded, from the viewpoint of preventing deformation of the cell shape with expansion and contraction of the electrodes and obtaining a satisfactory cycle characteristic for the battery.

(Coverage of substrate surface by thermoplastic polymer-containing layer)

For this embodiment, the total coverage area ratio of the thermoplastic polymer-containing layer on the substrate surface is preferably 5% to 55%, more preferably 6% to 40% and even more preferably 7% to 30%, from the viewpoint of maintaining adhesive force of the separator for the electrode while shortening the injection time for the electrolyte solution into the power storage device comprising the separator. The total coverage area ratio S of the thermoplastic polymer-containing layer in the substrate surface is calculated by the following formula.

$$S\ (\%) = \text{Total area coverage of thermoplastic polymer-containing layer} \div \text{surface area of substrate} \times 100$$

The total coverage area ratio of the thermoplastic polymer-containing layer can be adjusted by changing the polymer concentration of the coating solution or the coating amount, coating method and coating conditions for the polymer solution.

For this embodiment, from the viewpoint of maintaining adhesive force of the separator for the electrode while shortening the injection completion time for the electrolyte solution into the power storage device comprising the separator, the dot distance/dot diameter ratio of the thermoplastic polymer-containing layer and the total coverage area ratio of the thermoplastic polymer-containing layer on the substrate surface are preferably in one of the following relationships.

Relationship 1: The dot distance/dot diameter ratio is 1.4 to 4 and the total coverage area ratio is 5% to 22%. From the viewpoint of achieving a more satisfactory balance between adhesive force and shortening of the injection completion time, it is preferred to control the dot distance/dot diameter ratio to 2.0 to 3.5 and the total coverage area ratio to 6% to 15%, and to control at least one of the dot diameter, the basis weight per side of the thermoplastic polymer-containing layer and the thickness of the porous layer (described below), to within a predetermined range. Specifically, the dot diameter is preferably controlled to be 200 $\mu$m to 800 $\mu$m, the basis weight per side of the thermoplastic polymer-containing layer is preferably controlled to be 0.04 g/m$^2$ to 0.12 g/m$^2$, and the thickness of the porous layer is preferably controlled to be 0.5 $\mu$m to 2.0 $\mu$m.

Relationship 2: The dot distance/dot diameter ratio is 0.8 to 1.3 and the total coverage area ratio is 23% to 46%. From the viewpoint of obtaining a more satisfactory balance between adhesive force and shortening of the injection completion time, simultaneously the thickness of the polyolefin microporous membrane is preferably 9 $\mu$m or lower and more preferably 7 $\mu$m or lower.

Relationship 3: The dot distance/dot diameter ratio is 0.5 to 0.7 and the total coverage area ratio is 47% to 55%.

The relationship between the dot distance/dot diameter ratio and the total coverage area ratio of the thermoplastic polymer-containing layer is preferably relationship 1 or relationship 2, and most preferably relationship 2, from the viewpoint of obtaining an even more satisfactory balance between adhesive force and shortening of the injection completion time.

Any of the following indicators may be used to evaluate satisfactory balance between the adhesive force (N/m) and shortening of the injection completion time (min).

Indicator 1: An adhesive force of 4.0 N/m or greater and an injection completion time of 17 min or less;
Indicator 2: An adhesive force of 2.5 N/m or greater and an injection completion time of 15 min or less;
Indicator 3: An adhesive force of 2.4 N/m or greater and an injection completion time of 11 min or less;
Indicator 4: An adhesive force of 2.2 N/m or greater and an injection completion time of 9 min or less;
Indicator 5: An adhesive force of 2.1 N/m or greater and an injection completion time of 8 min or less.

If any one of Indicators 1 to 4 is satisfied, the balance between the adhesive force (N/m) and shortening of the injection completion time (min) is evaluated as being even more satisfactory with higher adhesive force and shorter injection completion time.

[Substrate]

Since the separator must have an insulating property and ion permeability, the separator substrate will usually be formed of an insulating material sheet with a porous body structure, a polyolefin nonwoven fabric or a resin microporous membrane. A polyolefin microporous membrane having oxidation-reduction resistance and a dense, homogeneous porous structure is particularly preferred for a separator substrate to be used in a power storage device such as a nonaqueous secondary battery provided with a positive electrode and negative electrode that are able to occlusion/release lithium, and a nonaqueous electrolyte solution comprising an electrolyte dissolved in a nonaqueous solvent.

(Polyolefin microporous membrane)

The polyolefin microporous membrane for this embodiment is not particularly restricted and may be a microporous membrane composed of a polyolefin resin composition comprising a polyolefin, for example, and is preferably a porous membrane having a polyolefin resin as the main component. The polyolefin resin content in the polyolefin microporous membrane of this embodiment is not particularly restricted, but from the viewpoint of shutdown performance when used as a separator for a power storage device, it is preferably a porous membrane comprising a polyolefin resin composition in which the polyolefin resin constitutes 50% to 100% as the weight fraction among the total components composing the porous membrane. The proportion constituted by the polyolefin resin is more preferably 60% to 100%, and even more preferably 70% to 100%.

The polyolefin resin is not particularly restricted and may be a polyolefin resin commonly used in extrusion, ejection, inflation or blow molding, and homopolymers, copolymers and multistage polymers of ethylene, propylene, 1-butene, 4-methyl-1-pentene, 1-hexene and 1-octene may be used. Polyolefins selected from the group consisting of these homopolymers and copolymers or multistage polymers may be used alone, or they may be used in admixture.

Typical examples of polyolefin resins include, but are not restricted to, polyethylenes such as low-density polyethylene, linear low-density polyethylene, medium-density polyethylene, high-density polyethylene and ultrahigh molecular weight polyethylene, or isotactic polypropylene, atactic polypropylene, ethylene-propylene random copolymer, polybutene, ethylene-propylene rubber and the like.

When the separator of the embodiment is to be used as a battery separator, it is preferred to use a resin composed mainly of polyethylene and especially high-density polyethylene, for a low melting point and high strength. High-density polyethylene is polyethylene having a density of 0.942 g/cm$^3$ or greater as measured according to JIS K 7112.

From the viewpoint of improving the heat resistance of the porous membrane, it is more preferred to use a porous membrane composed of a resin composition comprising polypropylene and a polyolefin resin other than polypropylene. The spatial structure of the polypropylene is not restricted, and it may be isotactic polypropylene, syndiotactic polypropylene or atactic polypropylene.

There is no particular restriction on the proportion of polypropylene with respect to the total polyolefins in the polyolefin resin composition, but from the viewpoint of both heat resistance and a satisfactory shutdown function, it is preferably 1 to 35 weight%, more preferably 3 to 20 weight% and even more preferably 4 to 10 weight%. In such cases, there are no restrictions on a polyolefin resin other than polypropylene, and it may be a homopolymer or copolymer of an olefin hydrocarbon such as ethylene, 1-butene, 4-methyl-1-pentene, 1-hexene or 1-octene olefin, for example. Specific examples include polyethylene, polybutene and ethylene-propylene random copolymers.

From the viewpoint of the shutdown property, which represents the degree to which the pores become occluded by heat-fusion, the polyolefin resin other than polypropylene is preferably polyethylene, such as low-density polyethylene, linear low-density polyethylene, medium-density polyethylene, high-density polyethylene or ultrahigh molecular weight polyethylene. Polyethylene with a density of 0.93 g/cm$^3$ to 0.97 g/cm$^3$ as measured according to JIS K 7112 is preferred among these from the viewpoint of strength.

The viscosity-average molecular weight of the polyolefin resin composing the polyolefin microporous membrane is not particularly restricted, but is preferably 30,000 to 12,000,000, more preferably 50,000 or higher and lower than 2,000,000, even more preferably 100,000 or higher and lower than 1,200,000, and most preferably 500,000 or higher and lower than 1,000,000. If the viscosity-average molecular weight is 30,000 or higher, the melt tension during melt molding will be increased, resulting in satisfactory moldability, while the strength will also tend to be high due to entanglement between the polymers. If the viscosity-average molecular weight is 12,000,000 or lower, on the other hand, it will be easier to accomplish uniform melt kneading, and the sheet moldability, and especially thickness stability, will tend to be superior. The viscosity-average molecular weight is also preferably lower than 1,000,000 because the pores will be easily occluded during temperature increase, and a satisfactory shutdown function will tend to be obtained. For example, instead of using only a polyolefin with a viscosity-average molecular weight of lower than 1,000,000, a mixture of a polyolefin with a viscosity-average molecular weight of 2,000,000 and a polyolefin with a viscosity-average molecular weight of 270,000 may be used, in such a proportion that the viscosity-average molecular weight of the mixture is lower than 1,000,000.

The polyolefin microporous membrane of this embodiment may also comprise optional additives. Such additives are not particularly restricted and examples include polymers other than polyolefins; inorganic particles; phenol-based, phosphorus-based and sulfur-based antioxidants; metal soaps such as calcium stearate and zinc stearate; ultraviolet absorbers; light stabilizers; antistatic agents; anti-fogging agents; and color pigments. The total content of additives is preferably 20 parts by weight or lower, more preferably 10 parts by weight or lower and even more preferably 5 parts by weight or lower, with respect to 100 parts by weight of the polyolefin resin composition.

(Physical properties of polyolefin microporous membrane)

The puncture strength in terms of the basis weight (g/m$^2$) of the polyolefin microporous membrane (hereunder referred to as "basis weight-equivalent puncture strength") is preferably 50 gf/(g/m$^2$) or greater or 60 gf/(g/m$^2$) or greater. A polyolefin microporous membrane having a basis weight-equivalent puncture strength of 50 gf/(g/m$^2$) or greater or 60 gf/(g/m$^2$) or greater will be less likely to result in tearing of the polyolefin microporous membrane during impact testing of the power storage device. From the viewpoint of improving the power storage device safety, such as impact resistance, while maintaining the strength of the polyolefin microporous membrane, the basis weight-equivalent puncture strength is more preferably 70 gf/(g/m$^2$) or greater and even more preferably 80 gf/(g/m$^2$) or greater. The limit for the basis weight-equivalent puncture strength is not particularly restricted and may be 200 gf/(g/m$^2$) or lower, 150 gf/(g/m$^2$) or lower or 140 gf/(g/m$^2$) or lower, for example. The formula: 1 N $\rightleftharpoons$ 102.0 gf allows conversion from CCS units of "gf" to SI units of "N".

The puncture strength that is not in terms of the basis weight of the polyolefin microporous membrane (hereunder referred to simply as "puncture strength") has a lower limit of preferably 100 gf or greater, more preferably 200 gf or greater, and even more preferably 300 or greater. A puncture strength of 100 gf or greater is preferred from the viewpoint of inhibiting tearing of the polyolefin microporous membrane during impact testing. The upper limit for the puncture strength of the polyolefin microporous membrane is preferably 1000 gf or lower, more preferably 800 gf or lower and even more preferably 700 gf or lower from the viewpoint of stability during film formation. The lower limit may be a value that allows stable production during film formation and battery fabrication. The upper limit is set in balance with the other properties. The puncture strength can be increased by increasing the orientation of the molecular chains by application of shearing force or stretching of the molded article during extrusion, but since increasing the strength also impairs the thermostability due to higher residual stress, this is controlled as suitable for the purpose.

The porosity of the polyolefin microporous membrane of this embodiment is not particularly restricted, but is preferably 20% or greater, more preferably 35% or greater and even more preferably 40% or greater, and preferably 80% or lower, more preferably 60% or lower, even more preferably 55% or lower and most preferably 50% or lower. The porosity is preferably 20% or greater from the viewpoint of ensuring the permeability of the separator. The porosity is also preferably 80% or lower from the viewpoint of ensuring puncture strength. The porosity is also preferably 50% or lower from the viewpoint of shortening the injection time, since the filling volume of the electrolyte solution will be reduced. The porosity can be adjusted by changing the stretch ratio, for example.

The thickness of the polyolefin microporous membrane of the embodiment is not particularly restricted, but is preferably 2 $\mu$m or greater, more preferably 4 $\mu$m or greater and even more preferably 5 $\mu$m or greater, the upper limit being preferably 30 $\mu$m or smaller, more preferably 20 $\mu$m or smaller, even more preferably 16 $\mu$m or smaller, yet more preferably 12 $\mu$m or smaller, even yet more preferably 9 $\mu$m or smaller and most preferably 7 $\mu$m or smaller. The film thickness is preferably 2 $\mu$m or greater from the viewpoint of increasing the mechanical strength. The film thickness is also preferably 30 $\mu$m or smaller because this will reduce the volume occupied by the separator, which is advantageous for increasing the capacity of the battery. The film thickness is also preferably 12 $\mu$m or smaller, 9 $\mu$m or smaller or 7 $\mu$m or smaller, from the viewpoint of shortening the injection time, since the filling volume of the electrolyte solution will be reduced.

The air permeability of the polyolefin microporous membrane of the embodiment is not particularly restricted but is preferably 10 sec/100 cm$^3$ or greater, more preferably 20 sec/100 cm$^3$ or greater, even more preferably 30 sec/100 cm$^3$ and most preferably 40 sec/100 cm$^3$, and preferably 300 sec/100 cm$^3$ or lower, more preferably 200 sec/100 cm$^3$ or lower, even more preferably 180 sec/100 cm$^3$ and yet more preferably 140 sec/100 cm$^3$. The air permeability is preferably 10 sec/100 cm$^3$ or greater from the viewpoint of reducing self-discharge of the power storage device. The air permeability is also preferably 500 sec/100 cm$^3$ or lower from the viewpoint of obtaining a satisfactory charge-discharge characteristic. The air permeability can be adjusted by changing the stretching temperature or stretch ratio.

The mean pore size of the polyolefin microporous membrane of the embodiment is preferably 0.15 $\mu$m or smaller and more preferably 0.1 $\mu$m or smaller, with a lower limit of preferably 0.01 $\mu$m or greater. A mean pore size of 0.15 $\mu$m or lower is preferred from the viewpoint of reducing self-discharge of the power storage device and helping to prevent reduction in capacity, for use as a separator for a power storage device. The mean pore size can be adjusted by changing the stretch ratio during production of the polyolefin microporous membrane.

The short-circuit temperature, as an indicator of the heat resistance of the polyolefin microporous membrane of the embodiment, is preferably 140°C or higher, more preferably 150°C or higher and even more preferably 160°C or higher. A short-circuit temperature of 140°C or higher is preferred from the viewpoint of safety of the power storage device, when used as a separator for a power storage device.

The viscosity-average molecular weight of the polyolefin microporous membrane of the embodiment is not particularly restricted, but is preferably 100,000 to 5,000,000, more preferably 300,000 to 1,500,000 and even more preferably 500,000 to 1,000,000. A viscosity-average molecular weight of 100,000 to 5,000,000 is preferred from the viewpoint of the puncture strength, permeability, heat shrinkage and shutdown function of the polyolefin microporous membrane.

(Method for producing polyolefin microporous membrane)

The method for producing the polyolefin microporous membrane of this embodiment is not particularly restricted, and any publicly known method may be employed. Examples include a method of melt kneading a polyolefin resin composition and a plasticizer and molding the mixture into a sheet, optionally with stretching, and then extracting the plasticizer to form pores; a method of melt kneading a polyolefin resin composition, extruding it at a high draw ratio, and then stretching it with heat treatment to detach the polyolefin crystal interface and form pores; a method of melt kneading a polyolefin resin composition and an inorganic filler and casting the mixture into a sheet, and then detaching the interface between the polyolefin and the inorganic filler by stretching to form pores; and a method of first dissolving the polyolefin resin composition and then dipping it in a poor solvent for the polyolefin to solidify the polyolefin while simultaneously removing the solvent, to form pores. An example of a method of producing the porous membrane will now be described, as a method of melt kneading a polyolefin resin composition and a plasticizer, casting the mixture into a sheet, and then extracting the plasticizer.

First, the polyolefin resin composition and the plasticizer are melt-kneaded. In the melt kneading method, a polyolefin resin and other additives as necessary may be loaded into a resin kneader such as an extruder, kneader, Laboplastomil, kneading roll or Banbury mixer, and the plasticizer introduced at a desired proportion and kneaded in while hot melting the resin components. Before loading the polyolefin resin, the other additives and the plasticizer into the resin kneader, they are preferably pre-kneaded in a prescribed proportion using a Henschel mixer or the like. More preferably, only a portion of the plasticizer is loaded in during the pre-kneading, while the remainder of the plasticizer is kneaded in while side feeding it to the resin kneader. This can increase the dispersibility of the plasticizer, and allow stretching to a high factor without membrane rupture during stretching of the melt-kneaded cast sheet of the resin composition and plasticizer in the subsequent steps.

The plasticizer used may be a non-volatile solvent that can form a homogeneous solution at or above the melting point of the polyolefin. Examples of such non-volatile solvents include hydrocarbons such as liquid paraffin and paraffin wax; esters such as dioctyl phthalate and dibutyl phthalate; and higher alcohols such as oleyl alcohol and stearyl alcohol, with liquid paraffin being preferable among these. Liquid paraffins are preferred among these because of their high compatibility with polyethylene or polypropylene and low risk of interfacial peeling between the resin and plasticizer even when the melt kneaded mixture is stretched, thus tending to facilitate uniform stretching.

The proportion of the polyolefin resin composition and the plasticizer is not particularly restricted, so long as it is in a range in which they can undergo uniform melt kneading to then be cast into a sheet form. For example, the weight fraction of the plasticizer in the composition comprising the polyolefin resin composition and the plasticizer is preferably 30 to 80 weight% and more preferably 40 to 70 weight%. A plasticizer weight fraction of 80 weight% or lower will help prevent insufficient melt tension during melt molding, and will tend to improve moldability. A weight fraction of 30 weight% or greater, on the other hand, will avoid cutting of the polyolefin chains even with stretching of the mixture of the polyolefin resin composition and plasticizer to a high factor, and will aid in formation of a homogeneous and fine pore structure while also increasing strength.

The melt kneaded mixture is then cast into a sheet. The method of producing the cast sheet may be, for example, a method of extruding the melt kneaded mixture through a T-die or the like into a sheet, and contacting it with a heat conductor to cool it to a sufficiently lower temperature than the crystallization temperature of the resin component, thereby solidifying it. The heat conductor used for the cooling solidification may be metal, water, air or the plasticizer itself, but a metal roll is preferred because it has high heat conduction efficiency. When the mixture is to be contacted with metal rolls, it is more preferably sandwiched between the rolls because this will further increase the heat conduction efficiency while causing the sheet to become oriented and increasing the membrane strength, while the surface smoothness of the sheet will also be improved. The die lip gap when extruding into a sheet from a T-die is preferably from 400 $\mu$m to 3000 $\mu$m and more preferably from 500 $\mu$m to 2500 $\mu$m. Limiting the die lip gap to 400 $\mu$m or greater can reduce tip adhesion, can lower the effects of streaks and defects on the film quality, and can help avoid membrane rupture during the subsequent stretching step. Limiting the die lip gap to 3000 $\mu$m or smaller, on the other hand, will tend to speed the cooling rate to prevent cooling irregularities while maintaining sheet thickness stability.

The cast sheet obtained in this manner is then preferably stretched. Either uniaxial stretching or biaxial stretching can be suitably used for the stretching treatment, but biaxial stretching is preferred from the viewpoint of improving the strength of the obtained polyolefin microporous membrane. When a cast sheet is subjected to high-ratio stretching in the biaxial directions the molecules become oriented in the in-plane direction, such that the porous membrane that is obtained as the final result is less likely to tear, and has high puncture strength. The stretching method may be simultaneous biaxial stretching, sequential biaxial stretching, multistage stretching or multiple stretching, for example, with simultaneous biaxial stretching being preferred from the viewpoint of improved puncture strength, uniform stretching, and shutdown properties.

Simultaneous biaxial stretching is a stretching method in which stretching in the MD (the machine direction of the microporous membrane) and stretching in the TD (the direction crossing the MD of the microporous membrane at a 90° angle) are carried out simultaneously, and the draw ratios in each direction may be different. Sequential biaxial stretching is a stretching method in which stretching in the MD and TD are carried out independently, in such a manner that while the MD or TD stretching is being carried out, the other direction is in a non-constrained state or in an anchored state with fixed length.

The stretch ratio is an area increase by a factor of preferably in the range of 20 to 100, and more preferably in the range of 25 to 50. The stretch ratio in each axial direction is preferably in the range of 4 to 10 in the MD and 4 to 10, inclusive, in the TD, and more preferably in the range of 5 to 8 in the MD and 5 and 8 in the TD. If the total area factor is 20 or greater the obtained porous membrane will tend to be imparted with sufficient strength, and if the total area factor is 100 or lower, membrane rupture will tend to be prevented in the stretching step, resulting in high productivity.

The cast sheet may also be subjected to rolling. Rolling may be carried out, for example, by a press method using a double belt press machine or the like. Rolling can increase the orientation of the surface layer sections, in particular. The area increase by rolling is preferably by a factor of greater than 1 and not more than 3, and more preferably a factor of greater than 1 and not more than 2. If the rolling factor is greater than 1, the plane orientation will increase and the membrane strength of the final porous membrane will tend to increase. The rolling factor is preferably 3 or lower because there will be less of a difference in orientation between the surface layer portion and center interior portion, tending to allow formation of a porous structure that is more uniform in the thickness direction of the membrane.

The plasticizer is then removed from the cast sheet to obtain a porous membrane. The method of removing the plasticizer may be, for example, a method of immersing the cast sheet in an extraction solvent to extract the plasticizer, and then thoroughly drying it. The method of extracting the plasticizer may be either a batch process or a continuous process. In order to minimize shrinkage of the porous membrane, it is preferred to constrain the edges of the cast sheet during the series of steps of immersion and drying. The plasticizer residue in the porous membrane is preferably less than 1 weight%.

The extraction solvent used is preferably one that is a poor solvent for the polyolefin resin and a good solvent for the plasticizer, and that has a boiling point that is lower than the melting point of the polyolefin resin. Examples of such extraction solvents include hydrocarbons such as n-hexane and cyclohexane; halogenated hydrocarbons such as methylene chloride and 1,1,1-trichloroethane; non-chlorine-based halogenated solvents such as hydrofluoroethers and hydrofluorocarbons; alcohols such as ethanol and isopropanol; ethers such as diethyl ether and tetrahydrofuran; and ketones such as acetone and methyl ethyl ketone. These extraction solvents may be collected by a process such as distillation and then reutilized.

In order to help prevent shrinkage of the porous membrane, heat treatment for heat setting or thermal relaxation may be carried out either after the stretching step or after formation of the porous membrane. The porous membrane may also be subjected to post-treatment such as hydrophilizing treatment with a surfactant, or crosslinking treatment with ionizing radiation.

[Porous layer]

The separator for a power storage device of the embodiment may also comprise a porous layer that includes an inorganic filler and a resin binder. The location of the porous layer may be on at least part of the surface of the polyolefin microporous membrane, at least part of the surface of the thermoplastic polymer-containing layer and/or between the polyolefin microporous membrane and the thermoplastic polymer-containing layer. The porous layer may be provided on one or both sides of the polyolefin microporous membrane. The porous layer helps to improve thermal stability. The microporous membrane with the porous layer provided on it will hereunder be referred to as "multilayer porous membrane".

(Inorganic filler)

The inorganic filler used in the porous layer is not particularly restricted, but preferably it has a melting point of 200°C or higher and also high electrical insulating properties, and is also electrochemically stable in the range in which the lithium ion secondary battery is to be used.

Examples of materials for the inorganic filler include oxide-based ceramics such as alumina, silica, titania, zirconia, magnesia, ceria, yttria, zinc oxide and iron oxide; nitride-based ceramics such as silicon nitride, titanium nitride and boron nitride; ceramics such as silicon carbide, calcium carbonate, magnesium sulfate, aluminum sulfate, barium sulfate, aluminum hydroxide, aluminum oxide hydroxide or boehmite, potassium titanate, talc, kaolinite, dickite, nacrite, halloysite, pyrophyllite, montmorillonite, sericite, mica, amesite, bentonite, asbestos, zeolite, calcium silicate, magnesium silicate, diatomaceous earth and quartz sand; and glass fibers. Of these, one or more selected from the group consisting of alumina, boehmite and barium sulfate are preferred from the viewpoint of stability in the lithium ion secondary battery. Synthetic boehmite is even more preferred as boehmite, because it can reduce ionic impurities that may adversely affect the properties of electrochemical elements.

Examples of inorganic filler forms include laminar, scaly, polyhedral, needle-like, columnar, granular, spherical, fusiform and block-shaped forms, and various combinations of inorganic fillers with these forms may also be used. Preferred among these are block-shaped forms from the viewpoint of balance between permeability and heat resistance.

The aspect ratio of the inorganic filler is preferably 1.0 to 5.0 and more preferably 1.1 to 3.0. The aspect ratio is preferably 5.0 or lower from the viewpoint of inhibiting moisture adsorption on the multilayer porous membrane and preventing capacity deterioration with repeated cycling, and also from the viewpoint of inhibiting deformation at temperatures above the melting point of the polyolefin microporous membrane.

The specific surface area of the inorganic filler is preferably 3.0 m²/g to 17 m²/g, more preferably 5.0 m²/g to 15 m²/g and even more preferably 6.5 m²/g to 13 m²/g. The specific surface area is preferably 17 m²/g or lower from the viewpoint of inhibiting moisture adsorption on the multilayer porous membrane and preventing capacity deterioration with repeated cycling, and the specific surface area is preferably 3.0 m²/g or higher from the viewpoint of inhibiting deformation at temperatures above the melting point of the polyolefin microporous membrane. The specific surface area of the inorganic filler is measured using the BET adsorption method.

In the particle diameter distribution of a slurry containing the inorganic filler, the mean particle diameter $D_{50}$ of the inorganic particles is preferably 0.10 μm to 1.40 μm, more preferably 0.20 μm to 0.80 μm and even more preferably

0.25 μm to 0.50 μm. The $D_{50}$ is preferably 0.10 μm or greater from the viewpoint of inhibiting moisture adsorption on the multilayer porous membrane and preventing capacity deterioration with repeated cycling, and the $D_{50}$ is preferably 1.40 μm or lower from the viewpoint of inhibiting deformation at temperatures above the melting point of the polyolefin microporous membrane.

In the particle diameter distribution of a slurry containing the inorganic filler, the $D_{10}$ of the inorganic particles is preferably 0.08 μm to 0.80 μm, more preferably 0.09 μm to 0.50 μm and even more preferably 0.10 μm to 0.35 μm. The $D_{10}$ is preferably 0.08 μm or greater from the viewpoint of inhibiting moisture adsorption on the multilayer porous membrane and preventing capacity deterioration with repeated cycling, and the $D_{10}$ is preferably 0.80 μm or lower from the viewpoint of inhibiting deformation at temperatures above the melting point of the polyolefin microporous membrane.

The method of adjusting the particle diameter distribution of the inorganic filler as described above may be, for example, a method of pulverizing the inorganic filler using a ball mill, bead mill or jet mill to obtain the desired particle diameter distribution, or a method of preparing multiple fillers with different particle diameter distributions and then blending them.

The proportion of the inorganic filler in the porous layer may be set as appropriate from the viewpoint of bondability of the inorganic filler, and the permeability and heat resistance of the multilayer porous membrane, but it is preferably 50 weight% or greater and less than 100 weight%, more preferably 70 weight% to 99.99 weight%, even more preferably 80 weight% to 99.9 weight% and most preferably 90 weight% to 99 weight%.

(Resin binder)

The type of resin binder is not particularly restricted, but it is preferred to use one that is insoluble in the electrolyte solution of the lithium ion secondary battery and electrochemically stable in the operating range of the lithium ion secondary battery, when the multilayer porous membrane of the embodiment is used as a separator for a lithium ion secondary battery.

Specific examples of resin binders include the following 1) to 7).

1) Polyolefins: Polyethylene, polypropylene, ethylene-propylene rubber and modified forms of these;
2) Conjugated diene-based polymers: For example, styrene-butadiene copolymers and their hydrogenated forms, acrylonitrile-butadiene copolymers and their hydrogenated forms and acrylonitrile-butadiene-styrene copolymers and their hydrogenated forms;
3) Acrylic-based polymers: For example, methacrylic acid ester-acrylic acid ester copolymers, styrene-acrylic acid ester copolymers and acrylonitrile-acrylic acid ester copolymers;
4) Polyvinyl alcohol-based resins: For example, polyvinyl alcohol and polyvinyl acetate;
5) Fluorine-containing resins: For example, polyvinylidene fluoride, polytetrafluoroethylene, vinylidene fluoride-hexafluoropropylene-tetrafluoroethylene copolymer and ethylene-tetrafluoroethylene copolymer;
6) Cellulose derivatives: For example, ethyl cellulose, methyl cellulose, hydroxyethyl cellulose and carboxymethyl cellulose; and
7) Polymers that are resins with a melting point and/or glass transition temperature of 180°C or higher, or without a melting point but having a decomposition temperature of 200°C or higher; for example, polyphenylene ethers, polysulfones, polyethersulfones, polyphenylene sulfides, polyetherimides, polyamideimides, polyamides and polyesters.

Preferred from the viewpoint of further improving the safety during short circuiting are 3) acrylic-based polymers, 5) fluorine-containing resins and 7) polyamide polymers. Polyamides are preferably total aromatic polyamides, and especially polymetaphenylene isophthalamide, from the viewpoint of durability.

From the viewpoint of compatibility between the resin binder and the electrodes, the 2) conjugated diene-based polymers are preferred, while from the viewpoint of voltage endurance, the 3) acrylic-based polymers and 5) fluorine-containing resins are preferred.

The 2) conjugated diene-based polymer is a polymer that includes a conjugated diene compound as a monomer unit.

Examples of conjugated diene compounds include 1,3-butadiene, 2-methyl-1,3-butadiene, 2,3-dimethyl-1,3-butadiene, 2-chlor-1,3-butadiene, substituted straight-chain conjugated pentadienes and substituted or side chain-conjugated hexadienes, any of which may be used alone or in combinations of two or more. A particularly preferred compound is 1,3-butadiene.

The 3) acrylic-based polymer is a polymer that includes a (meth)acrylic-based compound as a monomer unit. A (meth)acrylic-based compound is at least one compound selected from the group consisting of (meth)acrylic acid and (meth)acrylic acid esters.

Examples of (meth)acrylic acid esters to be used as the 3) acrylic-based polymer include (meth)acrylic acid alkyl esters such as methyl acrylate, methyl methacrylate, ethyl acrylate, ethyl methacrylate, butyl acrylate, butyl methacrylate, 2-ethylhexyl acrylate and 2-ethylhexyl methacrylate; and epoxy group-containing (meth)acrylic acid esters such as glycidyl acrylate and glycidyl methacrylate; any of which may be used alone or in combinations of two or more. Particularly preferred among these are 2-ethylhexyl acrylate (EHA) and butyl acrylate (BA).

An acrylic-based polymer is preferably a polymer including EHA or BA as a main structural unit, from the viewpoint of safety in impact testing. A "main structural unit" is a portion of the polymer corresponding to a monomer constituting at least 40 mol% of the entire starting material used to form the polymer.

The 2) conjugated diene-based polymer and 3) acrylic-based polymer may also be obtained by copolymerization with other monomers that are copolymerizable with them. Examples of other copolymerizable monomers to be used include unsaturated carboxylic acid alkyl esters, aromatic vinyl-based monomers, vinyl cyanide-based monomers, unsaturated monomers with hydroxyalkyl groups, unsaturated amide carboxylate monomers, crotonic acid, maleic acid, maleic acid anhydride, fumaric acid and itaconic acid, any of which may be used alone or in combinations of two or more. Unsaturated carboxylic acid alkyl ester monomers are particularly preferred among these. Unsaturated carboxylic acid alkyl ester monomers include dimethyl fumarate, diethyl fumarate, dimethyl maleate, diethyl maleate, dimethyl itaconate, monomethyl fumarate and monoethyl fumarate, any of which may be used alone or in combinations of two or more.

The 2) conjugated diene-based polymer can be obtained by copolymerization of the aforementioned (meth)acrylic-based compound as another monomer.

From the viewpoint of exhibiting high binding force between inorganic particles even at high temperatures above ordinary temperature, and inhibiting heat shrinkage, the resin binder is preferably in the form of a latex, and is more preferably an acrylic-based polymer latex.

The mean particle diameter of the resin binder is preferably 50 to 500 nm, more preferably 60 to 460 nm and even more preferably 80 to 250 nm. If the mean particle diameter of the resin binder is 50 nm or greater, the ion permeability will be less likely to decrease and a high output characteristic will be more readily exhibited, when the porous layer containing the inorganic filler and binder has been layered on at least one side of the polyolefin porous membrane. Even with rapid temperature increase that occurs during abnormal heat release, a smooth shutdown property is exhibited and a high degree of safety can be obtained more easily. A mean particle diameter of 500 nm or smaller for the resin binder will tend to result in satisfactory bindability, satisfactory heat shrinkage as a multilayer porous membrane, and excellent safety.

The mean particle diameter of the resin binder can be controlled by adjusting the polymerization time, the polymerization temperature, the compositional ratio of the components, the loading order of the components, and the pH.

A dispersing agent such as a surfactant may also be added to the coating solution to improve the dispersion stability and coatability. The dispersing agent is adsorbed onto the surfaces of the inorganic particles in the slurry, thus stabilizing the inorganic particles by electrostatic repulsion or other forces, and examples thereof include polycarboxylic acid salts, sulfonic acid salts and polyoxyethers. The amount of dispersing agent added is preferably 0.2 parts by weight to 5.0 parts by weight and more preferably 0.3 parts by weight to 1.0 parts by weight, based on solid content, with respect to 100 parts by weight of the inorganic filler.

(Physical properties, structure and forming method for porous layer)

The thickness of the porous layer is preferably 0.5 $\mu$m to 5.0 $\mu$m, more preferably 0.7 $\mu$m to 4.0 $\mu$m, even more preferably 0.8 $\mu$m to 3.9 $\mu$m, yet more preferably 1.0 $\mu$m to 3.0 $\mu$m and most preferably 1.5 $\mu$m to 2.0 $\mu$m. The thickness of the porous layer is preferably 0.5 $\mu$m or greater from the viewpoint of inhibiting deformation at temperatures above the melting point of the porous membrane. The thickness of the porous layer is preferably 5.0 $\mu$m or smaller from the viewpoint of increasing the battery capacity and inhibiting moisture adsorption of the multilayer porous membrane. The thickness of the porous layer is also preferably 3.9 $\mu$m or smaller and more preferably 2.0 $\mu$m or smaller, from the viewpoint of shortening the injection time, since the filling volume of the electrolyte solution will be reduced.

The layer density in the porous layer is preferably 1.10 g/(m$^2$·$\mu$m) to 3.00 g/(m$^2$·$\mu$m), more preferably 1.20 g/(m$^2$·$\mu$m) to 2.90 g/(m$^2$·$\mu$m), even more preferably 1.40 g/(m$^2$·$\mu$m) to 2.70 g/(m$^2$·$\mu$m) and most preferably 1.50 g/(m$^2$·$\mu$m) to 2.50 g/(m$^2$·$\mu$m). The layer density of the porous layer is preferably 1.10 g/(m$^2$·$\mu$m) or greater from the viewpoint of inhibiting deformation at temperatures above the melting point of the polyolefin microporous membrane. The layer density in the porous layer is preferably 3.00 g/(m$^2$·$\mu$m) or lower from the viewpoint of preventing capacity deterioration with repeated cycling, while maintaining the ion permeability of the porous layer.

The method of forming the porous layer may be, for example, a method in which a coating solution comprising an inorganic filler and a resin binder is coated onto at least one side of a porous membrane composed mainly of a polyolefin resin to form a porous layer.

The solvent for the coating solution is preferably one that can uniformly and stably disperse the inorganic filler and resin binder, and examples include N-methylpyrrolidone, N,N-dimethylformamide, N,N-dimethyl acetamide, water, ethanol, toluene, hot xylene, methylene chloride and hexane.

In order to improve the dispersion stability or coatability, the coating solution may also contain various additives including dispersing agents such as surfactants; thickeners; moistening agents; antifoaming agents; and pH adjustors that contain acids or alkalis. These additives are preferably ones that can be removed during solvent removal, but they may also remain in the porous layer, so long as they are electrochemically stable in the range in which the lithium ion secondary battery is used, do not interfere with the battery reaction, and are stable up to about 200°C.

The method of dispersing the inorganic filler and resin binder in the coating solution solvent is not particularly restricted, so long as it allows the coating solution to exhibit the necessary dispersion properties for the coating step. Examples include mechanical stirring using a ball mill, bead mill, planetary ball mill, vibrating ball mill, sand mill, colloid mill, attritor, roll mill, high-speed impeller disperser, disperser, homogenizer, high-speed impact mill, ultrasonic disperser or stirring blade.

The method of coating the coating solution onto the microporous membrane is not particularly restricted, so long as the necessary layer thickness or coating area can be ensured, and examples include gravure coater methods, small-diameter gravure coater methods, reverse roll coater methods, transfer roll coater methods, kiss coater methods, dip coater methods, knife coater methods, air doctor coater methods, blade coater methods, rod coater methods, squeeze coater methods, cast coater methods, die coater methods, screen printing methods and spray coating methods.

The surface of the microporous membrane serving as the separator substrate is preferably surface-treated prior to application of the coating solution, because the coating solution will be easier to apply and adhesion between the inorganic filler-containing porous layer and the microporous membrane surface after coating will be increased. The method of surface treatment is not particularly restricted, so long as it does not significantly impair the porous structure of the microporous membrane, and examples include corona discharge treatment, mechanical roughening methods, solvent treatment, acid treatment and ultraviolet oxidation methods.

The method of removing the solvent from the coated film after application is also not particularly restricted, so long as it does not adversely affect the microporous membrane, and examples include methods of anchoring the porous membrane while drying it at a temperature below its melting point, and methods of reduced pressure drying at low temperature. The drying temperature and take-up tension are preferably adjusted as appropriate from the viewpoint of controlling shrinkage stress in the MD of the porous membrane and multilayer porous membrane.

[Separator properties and construction]

From the viewpoint of excellent injectability of the electrolyte solution, resistance to pooling of air and a shorter injection time, the contact angle of the separator with the electrolyte solution is preferably 0° to 20°, more preferably 2° to 18° and even more preferably 4° to 16°. The contact angle with the electrolyte solution is preferably measured on the side of the separator on which the thermoplastic polymer-containing layer has been formed, and more preferably it is measured on the side where the thermoplastic polymer-containing layer in the separator has been formed in a dot pattern.

The lower limit for the thickness of the separator for a power storage device is preferably 2.5 $\mu$m or greater, more preferably 4.5 $\mu$m or greater and even more preferably 5.5 $\mu$m or greater, from the viewpoint of ensuring the strength of the separator for a power storage device. The upper limit for the thickness of the separator for a power storage device, on the other hand, is preferably 35 $\mu$m or smaller and more preferably 18 $\mu$m or smaller from the viewpoint of obtaining a satisfactory charge-discharge characteristic, and even more preferably 14 $\mu$m or smaller, yet more preferably 12 $\mu$m or smaller and most preferably 8 $\mu$m or smaller, from the viewpoint of both a satisfactory charge-discharge characteristic and injectability.

The lower limit for the air permeability of the separator for a power storage device is preferably 10 sec/100 cm$^3$ or greater, more preferably 20 sec/100 cm$^3$ or greater, even more preferably 30 sec/100 cm$^3$ and preferably 40 sec/100 cm$^3$, while the upper limit is preferably 500 sec/100 cm$^3$ or lower, more preferably 300 sec/100 cm$^3$ or lower and even more preferably 200 sec/100 cm$^3$ or lower. The air permeability is preferably 10 sec/100 cm$^3$ or greater from the viewpoint of further reducing self-discharge of the power storage device, during use as a separator for a power storage device. The air permeability is also preferably 500 sec/100 cm$^3$ or lower from the viewpoint of obtaining a satisfactory charge-discharge characteristic. The air permeability of the separator for a power storage device can be adjusted by changing the stretching temperature or stretch ratio during production of the polyolefin microporous membrane, or the total coverage area ratio of the thermoplastic polymer-containing layer, or the form in which it is provided.

The shutdown temperature of the separator for a power storage device, as an indicator of the safety of the power storage device, is preferably 160°C or lower, more preferably 155°C or lower, even more preferably 150°C or lower and most preferably 145°C or lower.

The short-circuit temperature of the separator for a power storage device, as an indicator of heat resistance, is preferably 140°C or higher, more preferably 150°C or higher and even more preferably 160°C or higher. A short-circuit temperature of 160°C or higher is preferred from the viewpoint of safety of the power storage device, when used as a separator for a power storage device.

From the viewpoint of efficiently exhibiting the effect of the invention, the separator preferably has an asymmetrical multilayer structure in terms of the substrate, and more preferably it has a multilayer structure with the thermoplastic polymer-containing layer on both sides of the substrate and a porous layer comprising an inorganic filler and resin binder between one side of the substrate and the thermoplastic polymer-containing layer. The structure is preferably an asymmetric structure, with the porous layer comprising the inorganic filler and resin binder formed on only one side of the substrate, from the viewpoint of improving productivity by simplification of the coating process, and of increasing the adhesive force.

[Method for producing separator]

The method for forming the thermoplastic polymer-containing layer on the polyolefin microporous membrane is not particularly restricted, and an example is a method of coating the polyolefin microporous membrane with a coating solution comprising the thermoplastic polymer.

The method of applying the coating solution comprising the thermoplastic polymer onto the polyolefin microporous membrane is not particularly restricted, so long as it can provide the necessary layer thickness and coating area. Examples include gravure coater methods, small-diameter gravure coater methods, reverse roll coater methods, transfer roll coater methods, kiss coater methods, dip coater methods, knife coater methods, air doctor coater methods, blade coater methods, rod coater methods, squeeze coater methods, cast coater methods, die coater methods, screen printing methods, spray coating methods, spray coater methods and ink-jet coating methods. Preferred among these are gravure coater methods or spray coating methods, from the viewpoint of a high degree of freedom for the coating shape of the thermoplastic polymer, to easily obtain the preferred area ratio. From the viewpoint of adjusting the dot pattern of the thermoplastic polymer-containing layer as described above, preferred methods are gravure coating, ink-jet application and coating methods that allow easy adjustment of the printing plate.

If the coating solution infiltrates to the interior of the microporous membrane when the thermoplastic polymer is coated on the polyolefin microporous membrane, the adhesive resin will become embedded on the surfaces and interiors of the pores, lowering the permeability. The medium of the coating solution is therefore preferably a poor solvent for the thermoplastic polymer.

A poor solvent for the thermoplastic polymer is preferably used as the medium of the coating solution, from the viewpoint of inhibiting reduction in permeability, since the coating solution in the microporous film will fail to infiltrate and the adhesive polymer will be present mainly on the surface of the microporous film. Water is preferred as a medium with such properties. Media that can be used in combination with water include, but are not particularly restricted to, ethanol and methanol.

From the viewpoint of adjusting the dot pattern of the thermoplastic polymer-containing layer as described above, it is preferred to optimize the thermoplastic polymer-containing coating solution (or simply "coating material") using the thermoplastic polymer and poor solvent described above.

From the viewpoint of adjusting the contact angle of the thermoplastic polymer-containing layer or separator with respect to the electrolyte solution to within the numerical range specified above, the thermoplastic polymer-containing coating solution has a coating material viscosity of preferably in the range of 30 mPa·s to 100 mPa·s and more preferably in the range of 50 mPa·s to 80 mPa·s. A coating material viscosity within this range will tend to result in suitable thickening, thus reducing leveling, providing an irregular structure for the thermoplastic polymer particles on the dot surfaces, and increasing the wettability.

From the viewpoint of adjusting the contact angle of the thermoplastic polymer-containing layer or separator with respect to the electrolyte solution to within the numerical range specified above, the coating material pH of the thermoplastic polymer-containing coating solution is preferably in the range of 5 to 7.9 and more preferably in the range of 5.5 to 7.7. A coating material pH within this range can suitably reduce electrostatic repulsion and lower dispersion stability, thereby inhibiting closest packing of the thermoplastic polymer particles during the drying step, and tending to improve the wettability by the irregular structure of the thermoplastic polymer particles.

Surface treatment of the microporous membrane serving as the separator substrate is also preferably carried out before coating, in order to facilitate application of the coating solution and increased adhesion between the microporous membrane or porous layer and the adhesive polymer. The method of surface treatment is not particularly restricted, so long as it does not significantly impair the porous structure of the microporous membrane, and examples include corona discharge treatment, plasma treatment, mechanical roughening methods, solvent treatment, acid treatment and ultraviolet oxidation, etc.

For corona discharge treatment, from the viewpoint of adjusting the contact angle between the thermoplastic polymer-containing layer or separator and the electrolyte solution to within the numerical range specified above, the intensity of corona treatment on the substrate surface is preferably in the range of 1 $W/(m^2/min)$ to 40 $W/(m^2/min)$, more preferably in the range of 3 $W/(m^2/min)$ to 32 $W/(m^2/min)$ and even more preferably in the range of 5 $W/(m^2/min)$ to 25 $W/(m^2/min)$. An intensity of corona treatment within the aforementioned range will tend to increase affinity with the electrolyte solution by introduction of hydrophilic groups into the substrate surface, while also improving the wettability. Corona discharge treatment is also preferably carried out after the dot pattern has been formed in the thermoplastic polymer-containing layer by coating.

The method of removing the solvent from the coated film after coating is not particularly restricted, so long as it is a method that does not adversely affect the porous membrane. For example, it may be a method of drying the porous membrane at a temperature below its melting point while anchoring it, a method of reduced pressure drying at low temperature, or a method of immersing it in a poor solvent for the adhesive polymer to solidify the adhesive polymer while simultaneously extracting out the solvent.

For drying of the coated film, from the viewpoint of adjusting the contact angle between the thermoplastic polymer-containing layer or separator and the electrolyte solution to within the numerical range specified above, the drying speed is preferably in the range of 0.03 g/(m2·s) to 4.0 g/(m2·s), more preferably in the range of 0.05 g/(m2·s) to 3.5 g/(m2·s) and even more preferably in the range of 0.1 g/(m2·s) to 3.0 g/(m2·s). A drying speed within this range will be a suitable drying speed, tending to reduce leveling, providing an irregular structure for the thermoplastic polymer particles on the dot surfaces, and increasing the wettability. From the same viewpoint, the temperature is preferably increased by warming or heating during drying of the coated film, to an extent that does not degrade the particle shapes in the thermoplastic polymer-containing layer.

[Stacked body]

A stacked body of the embodiment is obtained by stacking a separator and electrodes. The separator of the embodiment may be used as a stack by bonding with the electrodes. The stacked body has excellent handleability during winding and provides an excellent rate characteristic for a power storage device, while also exhibiting superior adhesion and permeability for the thermoplastic polymer and polyolefin microporous membrane. Consequently, there are no particular restrictions on usage of the stacked body, and suitable uses include power storage devices, among which are batteries such as nonaqueous electrolyte solution secondary batteries, and condensers or capacitors.

An electrode to be used in the stacked body of the embodiment may be any one mentioned below under "Power storage device". The method for producing the stacked body using a separator of the invention is not particularly restricted, and for example, production may be by stacking the separator of the embodiment with the electrodes, if necessary while heating and/or pressing. The heating and/or pressing can be carried out during stacking of the electrodes and separator. Alternatively, the production method may be stacking of the electrodes and separator, followed by winding into a circular or flat spiral shape to obtain a wound body which is then heated and/or pressed.

The stacked body may also be produced by flat stacking in the order: positive electrode-separator-negative electrode-separator or negative electrode-separator-positive electrode-separator, if necessary with heating and/or pressing. From the viewpoint of efficiently exhibiting the effect of the invention, the stacking is preferably carried out in a manner such that the positive electrode and the side of the separator which has the porous layer described above are disposed facing each other, in terms of the substrate of the separator.

More specifically, the separator of the embodiment may be prepared as a longitudinal separator with a width of 10 to 500 mm (preferably 80 to 500 mm) and a length of 200 to 4000 m (preferably 1000 to 4000 m), with the separator being stacked during production according to the order: positive electrode-separator-negative electrode-separator or negative electrode-separator-positive electrode-separator, if necessary with heating and/or pressing.

The heating temperature is preferably 40 to 120°C. The heating time is preferably 5 seconds to 30 minutes. The pressing pressure is preferably 1 to 30 MPa. The pressing time is also preferably 5 seconds to 30 minutes. The order of heating and pressing may be: heating followed by pressing, pressing followed by heating, or simultaneous pressing and heating. Simultaneous pressing and heating is preferred.

<Power storage device>

The separator of the embodiment may be used as a separator for a battery, condenser or capacitor, or it may be used for separation of substances. When used as a separator for a power storage device, it is possible to provide adhesiveness for the electrodes and excellent battery performance. A preferred mode in which the power storage device is a nonaqueous electrolyte solution secondary battery will now be described.

For manufacture of a nonaqueous electrolyte solution secondary battery using the separator of this embodiment, there are no restrictions for the positive electrode, negative electrode or nonaqueous electrolyte solution, and any publicly known ones may be used.

The positive electrode material is not particularly restricted, and examples include lithium-containing composite oxides such as $LiCoO_2$, $LiNiO_2$, spinel-type $LiMnO_4$ and olivine-type $LiFePO_4$.

The negative electrode material is also not particularly restricted, and examples include carbon materials such as graphite, non-graphitizable carbon, easily graphitizable carbon and complex carbon; or silicon, tin, metal lithium and various alloy materials.

The nonaqueous electrolyte solution is not particularly restricted, and for example, an electrolyte solution with an electrolyte dissolved in an organic solvent may be used, with examples of organic solvents including propylene carbonate, ethylene carbonate, dimethyl carbonate, diethyl carbonate and ethylmethyl carbonate, and examples of electrolytes including lithium salts such as $LiClO_4$, $LiBF_4$ and $LiPF_6$.

The method for producing a power storage device using the separator of the embodiment is not particularly restricted, and when the power storage device is a secondary battery, for example, it can be produced by first preparing separators of the embodiment as longitudinally shaped separators each with a width of 10 to 500 mm (preferably 80 to 500 mm) and a length of 200 to 4000 m (preferably 1000 to 4000 m), stacking the separators in the order: positive electrode-separator-negative electrode-separator, or negative electrode-separator-positive electrode-separator, winding the stack into a circular or flat spiral form to obtain a wound body, and inserting the wound body into a battery can and further injecting an electrolyte solution into it.

A stacked body can then be formed by subjecting the wound body to heating and/or pressing. The wound body can also be produced using the stacked body wound into a circular or flat spiral form. The power storage device can alternatively be produced through a step of injecting an electrolyte solution into a flat stack in the order: positive electrode-separator-negative electrode-separator or negative electrode-separator-positive electrode-separator, or the stacked body laminated with a bag-like film, optionally through a step of heating and/or pressing. The step of heating and/or pressing may be carried out before and/or after the step of injecting the electrolyte solution.

From the viewpoint of efficiently exhibiting the effect of the invention in a power storage device comprising a positive electrode, negative electrode, separator and nonaqueous electrolyte solution, preferably the side of the separator with the porous layer described above is disposed in a manner facing the positive electrode, in terms of the substrate.

Unless otherwise specified, the measured values for the different parameters mentioned above are the values measured by the measuring methods in the following Examples.

EXAMPLES

The present invention will now be explained in detail by Examples and Comparative Examples, with the understanding that these Examples are in no way limitative on the invention. The methods of measuring and evaluating the physical properties used in the following Production Examples, Examples and Comparative Examples were as follows. Unless otherwise specified, measurement and evaluation were carried out under conditions of room temperature (23°C), 1 atmosphere, and 50% relative humidity.

[Measuring methods]

<Viscosity-average molecular weight (Mv)>

The limiting viscosity [η] at 135°C with a decalin solvent was determined based on ASRM-D4020, and the Mv of polyethylene was calculated by the following formula.

$$[\eta] = 0.00068 \times Mv^{0.67}$$

The Mv of polypropylene was calculated by the following formula.

$$[\eta] = 1.10 \times 10^{-4} Mv^{0.80}$$

<Mean particle diameter of thermoplastic polymer>

The mean particle diameter of the thermoplastic polymer was measured using a particle diameter measuring device (Microtrac MT3300EXII by Nikkiso Co., Ltd.). An aqueous dispersion of the thermoplastic polymer particles was prepared (solid concentration: 25 to 30%). Under measuring conditions with a loading index of 0.15 to 0.3 and a measuring time of 300 seconds, the value of the particle diameter with a cumulative frequency of 50% in the obtained data was recorded as the mean particle diameter ($\mu$m), as listed in Table 1-1 to Table 1-12 below.

The mean particle diameter of the thermoplastic polymer may be observed using a scanning electron microscope (SEM) (model: S-4800, Hitachi, Ltd.) at a magnification allowing measurement of individual particle diameters (for example, 10,000x for a thermoplastic polymer of about 0.5 $\mu$m), measuring the particle diameters of 100 different thermoplastic polymer particles to calculate the mean particle diameter.

<Basis weight of polyolefin microporous membrane and basis weight per side of thermoplastic polymer-containing layer>

A 10 cm × 10 cm-square sample (polyolefin porous substrate or polyolefin porous substrate + inorganic filler porous layer) was cut out, and the weight was measured using an AEL-200 electronic scale by Shimadzu Corp. The obtained weight was multiplied by 100 to calculate the basis weight ($g/m^2$) of the membrane per 1 $m^2$.

A 10 cm × 10 cm-square sample was cut out from a separator having a thermoplastic polymer-containing layer formed on a substrate, and an AEL-200 electronic scale was used to measure its weight. The obtained weight was multiplied by 100 to calculate the basis weight ($g/m^2$) of the separator per 1 $m^2$.

The basis weight per side of the thermoplastic polymer-containing layer was calculated from the difference in basis weight before and after formation of the thermoplastic polymer-containing layer.

Alternatively, the basis weight per side of the thermoplastic polymer-containing layer can be determined by peeling off the thermoplastic polymer-containing layer from the surface of a 10 cm × 10 cm-square sample and calculating the weight reduction (of the peeled sample) using a thermogravimetric differential thermal analyzer (NEXTA STA 200RV by Hitachi High-Tech Science, Ltd.), or calculating the change in weight before and after peeling.

<Porosity (%) of polyolefin microporous membrane>

A 10 cm × 10 cm-square sample was cut out from the polyolefin microporous membrane, and its volume ($cm^3$) and mass (g) were determined and used for calculation by the following formula, using 0.95 ($g/cm^3$) as the membrane density.

$$\text{Porosity} = (\text{Volume - mass/membrane density})/\text{volume} \times 100$$

<Air permeability (sec/100 $cm^3$)>

The air permeability was determined as the air permeability resistance measured with a Gurley air permeability tester (G-B2™ by Toyo Seiki Kogyo Co., Ltd.), according to JIS P-8117 .

<Puncture strength (g) of polyolefin microporous membrane>

Using a Handy Compression Tester KES-G5™ by Kato Tech Corp., the polyolefin microporous membrane was anchored with a specimen holder having an opening diameter of 11.3 mm. Next, the center section of the anchored polyolefin microporous membrane was subjected to a puncture test with a needle having a tip curvature radius of 0.5 mm, at a puncture speed of 2 mm/sec in a 25°C atmosphere, obtaining the puncture strength (g) as the maximum puncture load. The basis weight-equivalent puncture strength can also be calculated from the puncture strength and the basis weight.

<Glass transition temperature (°C) of thermoplastic polymer>

A sufficient amount of the thermoplastic polymer coating solution (nonvolatile content = 30%) was placed in an aluminum tray and dried for 30 minutes in a hot air drier at 130°C. About 17 mg of the dried film was packed into a measuring aluminum container, and the DSC curve and DDSC curve were obtained using a DSC measuring apparatus (DSC6220 by Shimadzu Corp.) under a nitrogen atmosphere. The measuring conditions were as follows.

(First stage temperature increase program)

70°C start, temperature increase at 15°C/minute. The temperature was maintained for 5 minutes after reaching 110°C.

(Second stage temperature decrease program)

Temperature decrease from 110°C at 40°C/minute. The temperature was maintained for 5 minutes after reaching -50°C.

(Third stage temperature increase program)

Temperature increase from -50°C to 130°C at 15°C/minute. Recording of DSC and DDSC data during the third stage heating.

The intersection between the baseline (an extended straight line toward the high-temperature end from the baseline of the obtained DSC curve) and the tangent line at the inflection point (the point where the upwardly convex curve changed to a downwardly convex curve) was recorded as the glass transition temperature (Tg).

<Dot diameter and dot distance>

The dot diameter in the coated pattern is observed using a scanning electron microscope (SEM) (model: S-4800 by Hitachi, Ltd.) at a magnification allowing observation of one dot per visual field (for example, 300x for a dot diameter of about 200 $\mu$m), and defined for a continuous thermoplastic polymer region. A continuous thermoplastic polymer region is a region that is continuous and has a width exceeding 10 $\mu$m. A continuous thermoplastic polymer region is formed, for example, by continuous compacting and contact of thermoplastic polymer particles in the in-plane direction.

Fig. 1 is a pair of schematic plan-view diagrams of a separator, showing dot diameters and dot distances. For example, in SEM planar observation of the separator shown in Fig. 1(a), a pattern of a continuous thermoplastic polymer region (X) is defined, excluding regions with widths of ≤10 $\mu$m visible in the SEM image, and as shown in Fig. 1(b), there is visibly defined a continuous thermoplastic polymer region (X) that does not include the region of discontinuously interspersed thermoplastic polymer (particle scattering region "sp").

The dot diameter and dot distance are illustrated in Fig. 2, showing schematic plan views after the continuous thermoplastic polymer region (X) has been defined as shown in Fig. 1, the region (X) in Fig. 2 being shown with a hatch background.

The dot diameters in the continuous thermoplastic polymer region (X) were measured using a microscope (model: VHX-7000 by Keyence Corp.). The separator sample was photographed by the command "Full coaxial" at a magnification allowing measurement of diameters of at least 5 dots (for example, 100x for dot diameters of about 200 $\mu$m). The commands "Plane measurement" and "Diameter" were selected from "Measure".

When the dots formed a clover shape on the porous layer including the inorganic particles and resin binder, as shown in Fig. 2(e), for example, the diameter used was a circumscribed circle (CC) around the continuous thermoplastic polymer region (X). The diameter of each circumscribed circle (CC) was measured for multiple (5) dots, and the average value was calculated as the dot diameter.

When the dots formed a tailing teardrop shape as shown in Fig. 2(f) (for example, dots formed directly on the polyolefin substrate), or an ellipsoid shape, the diameter used was the maximum inscribed circle (MIC) in the continuous thermoplastic polymer region (X). The diameter of each maximum inscribed circle (MIC) was measured for multiple (5) dots, and the average value was calculated as the dot diameter.

When both a continuous thermoplastic polymer region (X) and a thermoplastic polymer-free region (Y) were present as shown in Fig. 2(c) and (d), for example, the dot outer edge section was defined as the circumference of the continuous thermoplastic polymer region (X), the circumference of the dot circumscribed circle (CC) as depicted in Fig. 2(e), or the circumference of the dot maximum inscribed circle (MIC) as depicted in Fig. 2(f), and defining "dot distance" as the distance from the outer edge section of the dot to the outer edge section of the nearest other dot, 5 observation locations were measured in measuring mode and their average was recorded as the "dot distance". Fig. 2(g) shows dot diameter (a) and dot distance (b) for multiple dots. When the contrast is insufficiently clear, a different light source (model PD2-1024 by CCS, Inc.) may be used.

The presence of a particle scattering region (sp) generated by spray coating, ink-jet coating or gravure coating (a region where thermoplastic polymer particles accumulate in a discontinuous, non-contacting manner), as in Fig. 1(a) and Fig. 2(b) to (d), for example, is preferred from the viewpoint of achieving a superior balance between adhesive force and injectability, but for measurement of the dot diameter (a) and definition of the dot outer edge sections, the circumscribed circle (CC) or maximum inscribed circle (MIC) is established as a region without the particle scattering region (sp).

<Total coverage area ratio of thermoplastic polymer-containing layer with respect to substrate surface (%)>

The total coverage area ratio of the coating pattern of the thermoplastic polymer-containing layer on the substrate surface was measured using a microscope (model: VHX-7000 by Keyence Corp.). The separator sample was photographed by the command "Full coaxial" at a magnification allowing simultaneous observation of at least 10 dots (for example, 100x for dot diameters of about 200 $\mu$m). The commands "Auto area measurement (grain count)", "extraction method Brightness (normal)" and "Fill holes" are selected from "Measure", and a suitable brightness (preferably -10 to 10) is selected to binarize the covered portions and non-covered portions of the thermoplastic polymer-containing layer, for measurement of the total coverage area ratio of the thermoplastic polymer-containing layer. When the contrast is insufficiently clear, a different light source (model PD2-1024 by CCS, Inc.) may be used.

<Measurement of average height of thermoplastic polymer-containing layer>

The separator sample is subjected to cross-section processing with a BIB (broad ion beam). The cross-section processing is carried out with an IM4000 by Hitachi High-Technologies Corp., under processing conditions with an argon beam species, an acceleration voltage of 3 kV and a beam current of 25 to 35 $\mu$A. In order to reduce heat damage during processing, the multilayer porous membrane may be cooled as necessary just before processing. Specifically, the multilayer porous membrane is allowed to stand for a day and a night in a cooling device at -40°C. This allows a smooth cross-section of the separator to be obtained. The height of the thermoplastic polymer-containing layer was measured using a scanning electron microscope (SEM) (Model S-4800 by Hitachi Corp.). Observation was under conditions with osmium vapor deposition, an acceleration voltage of 1.0 kV and 5000x magnification, measuring the maximum thickness of the thermoplastic polymer-containing layer at 5 observed locations and calculating the average value as the average height. In the case of a dot pattern, the distance from the substrate surface to the dot apex along the thickness direction of the thermoplastic polymer-containing layer is used as the maximum dot thickness for calculation of the average dot height by the same method described above.

<Adhesion to electrodes>

The separators for a power storage device obtained for each of the Examples and Comparative Examples, and positive electrodes (product of Enertech Co., positive electrode material: $LiCoO_2$, conductive aid: acetylene black, L/W: 36 mg/cm$^2$ on both sides, Al current collector thickness: 15 $\mu$m, pressed positive electrode thickness: 120 $\mu$m) or negative electrodes (product of Enertech Co., negative electrode material: graphite, conductive aid: acetylene black, L/W: 20 mg/cm$^2$ on both sides, Cu current collector thickness: 10 $\mu$m, pressed negative electrode thickness: 140 $\mu$m) as adherends, were each cut out to rectangular shapes with widths of 15 mm and lengths of 60 mm. These were stacked with the thermoplastic polymer-containing layer of the separator facing the positive electrode or negative electrode to obtain a stacked body. For a separator having a porous layer comprising inorganic particles and a resin binder on only one side of the polyolefin microporous membrane, the stacked body was fabricated using a positive electrode for the porous layer side comprising the inorganic particles and resin binder and a negative electrode for the polyolefin substrate side. Each stacked body was then pressed under the following conditions.

Press pressure: 1 MPa
Temperature: 90°C
Pressing time: 5 sec

For each of the pressed stacked bodies, the force gauge ZP5N (product name) by Imada Co., Ltd., and MX2-500N (product name) by Imada Co., Ltd. were used for a 90° peel test at a peel rate of 50 mm/min, with a pulling system in which the electrodes were anchored and the separator held and pulled to measure the peel strength. The average for the peel strength in the peel test for a 40 mm length, carried out under the conditions described above, was recorded as the adhesive force with the electrode. When a separator exhibiting adhesive force of 2 N/m or greater according to this method is used in a power storage device, the exhibited force of adhesion with the facing positive electrode and negative electrode is satisfactory.

<Injectability of electrolyte solution>

The separators for a power storage device obtained for each of the Examples and Comparative Examples, and positive electrodes (product of Enertech, positive electrode material: $LiCoO_2$, conductive aid: acetylene black, L/W: 36 mg/cm$^2$ on both sides, Al current collector thickness: 15 $\mu$m, pressed positive electrode thickness: 120 $\mu$m) or negative electrodes (Enertech, negative electrode material: graphite, conductive aid: acetylene black, L/W: 20 mg/cm$^2$ on both sides, Cu current collector thickness: 10 $\mu$m, pressed negative electrode thickness: 140 $\mu$m) as adherends, were each cut out to rectangular shapes with widths of 15 mm and lengths of 60 mm. These were stacked with the thermoplastic polymer-containing layer of the separator facing the positive electrode or negative electrode to obtain a stacked body. For a separator having a porous layer comprising inorganic particles and a resin binder on only one side of the polyolefin microporous membrane, the stacked body was fabricated using a positive electrode for the porous layer side comprising the inorganic particles and resin binder and a negative electrode for the polyolefin substrate side. Each stacked body was then pressed under the following conditions.

Press pressure: 1 MPa
Temperature: 90°C
Pressing time: 5 sec

Each pressed stacked body was sandwiched between two glass plates (S1214 by Matsunami Glass Ind., Ltd., size: 76 × 26 mm, thickness: 1.2 to 1.5 mm), anchored with clips (JB34c by Kokuyo Co., double clip (medium), silver, opening width: 25 mm) at both sides and the top, for a total of 3 locations, and then immersed in an electrolyte solution (LBG-00307 by Kishida Chemical Co., Ltd., ethylene carbonate (EC):diethyl carbonate (DEC) = (2:3 volume/volume %)). The sections where the electrolyte solution permeated the separator and electrode surface were visually observed from the separator side, and the time required for permeation of the total surface was recorded as the injection completion time. The positive electrode/separator stacked body and the negative electrode/separator stacked body were each measured for injection completion time.

For an on-vehicle cell, time is required for injection as the cell widens, creating a bottleneck during the cell production process. In order to solve this problem it is preferred for the injection step to last no longer than 60 hours. Assuming an ordinary in-vehicle battery size (such as a 200 mm width), a power storage device using a separator with an injection completion time of 20 minutes or less, being obtained by this method with either a positive electrode/separator stacked body or a negative electrode/separator stacked body, will have the injection time limited to no longer than 60 hours. A power storage device using a separator with an injection completion time of 20 min or less, obtained by this method, will have satisfactory electrolyte penetration at the interface between the facing positive electrode and negative electrode, thus improving the injectability of the cell as a whole.

<Measurement of electrolyte solution contact angle>

A glass plate (S1214 by Matsunami Glass Ind., Ltd., size: 76 × 26 mm, thickness: 1.2 to 1.5 mm) was attached to the opposite side from the measuring side of the separator for a power storage device obtained in each of the Examples and Comparative Examples, using double-sided tape (NICETACK NW-15 by Nichiban Co., Ltd.), to fabricate a measuring sample. Using a dynamic contact angle meter (model DCA-VM by Kyowa Interface Science Co., Ltd.), a 2 μL droplet of electrolyte solution (LBG-00307 by Kishida Chemical Co., Ltd., EC/DEC (2:3 v/v %)) was formed at the needle tip of a syringe and then dripped onto the measuring sample, measuring the contact angle 6000 ms after liquid separation. The contact angle was measured in a thermostatic chamber, under conditions with a temperature of 23°C and 42% humidity.

<Rate of change in dot distance before and after immersion in electrolyte solution>

Each separator for a power storage device obtained in the Examples and Comparative Examples was immersed in propylene carbonate (LBG-64955, PC by Kishida Chemical Co., Ltd.) as the electrolyte solution, allowing thorough permeation of the electrolyte solution. After standing for 24 hours, the separator was removed out and the surface was washed with ethanol. The dot gap d2 (μm) was measured by the same method as described above under <Dot diameter and dot distance>, and the ratio with the dot gap d1 (μm) before immersion in the electrolyte solution was calculated as the rate of change Δd (%) for the dot gap, using the following formula.

$$\Delta d = (d1 - d2)/d1 * 100$$

<Thermoplastic polymer>

The following thermoplastic polymers were prepared.

• Acrylic polymer 1

An acrylic latex with a high Tg (Tg = 62°C) and an acrylic latex with a low Tg (Tg < 20°C) were blended, forming a latex blend (acrylic polymer 1, mean particle diameter: 0.5 μm).

• Acrylic polymer 2

An acrylic latex with a high Tg (Tg = 56°C) and an acrylic latex with a low Tg (Tg < 20°C) were blended, forming a latex blend (acrylic polymer 2, mean particle diameter: 0.5 μm).

• Acrylic polymer 3

An acrylic latex with a high Tg (Tg = 95°C) and an acrylic latex with a low Tg (Tg < 20°C) were blended, forming a latex blend (acrylic polymer 3, mean particle diameter: 0.55 μm).

• Acrylic polymer 4

Acrylic acid ester-based particles (Tg = 20°C) were dispersed in water to form a latex (acrylic polymer 4, mean particle diameter: 0.12 $\mu$m).

·SBR

Styrene-butadiene copolymer particles were dispersed in water to obtain a latex (SBR, mean particle diameter: 0.15 $\mu$m).

·PVDF

Commercially available polyvinylidene fluoride (PVDF-HFP copolymer, Tm = 150°C, mean particle diameter: 0.2 $\mu$m) was prepared. For coating, a slurry was prepared by admixture of the PVDF-HFP copolymer with the acrylic latex (Tg < 20°C) in an amount sufficient to ensure binding force after coating (PVDF: acrylic polymer = 4:1 to 10: 1, as solid weight ratio).

· Control acrylic polymer 1

A coating solution was prepared containing the thermoplastic polymer described in Example 12B of International Patent Publication No. WO2014/017651 (PTL 1), for use as control acrylic polymer 1.

• Control acrylic polymer 2

A coating solution was prepared containing the thermoplastic polymer described in Example 1 of Japanese Patent No. 7103760, for use as control acrylic polymer 2.

• Control acrylic polymer 3

A coating solution was prepared containing the thermoplastic polymer described in Example 7A of Japanese Patent No. 6688006, for use as control acrylic polymer 3.

<Example 1>

(Production of polyolefin microporous membrane 1A)

High-density polyethylene homopolymer with an Mv of 700,000, at 47 parts by weight, high-density polyethylene homopolymer with an Mv of 300,000, at 46 parts by weight, and polypropylene homopolymer with an Mv of 700,000, at 7 parts by weight, were dry blended using a tumbler blender. To 99 parts by weight of the obtained polyolefin mixture there was added 1 part by weight of tetrakis-[methylene-(3',5'-di-t-butyl-4'-hydroxyphenyl)propionate]methane as an antioxidant, and a tumbler blender was again used for dry blending to obtain a mixture. The obtained mixture was supplied to a twin-screw extruder using a feeder, under a nitrogen atmosphere. Liquid paraffin (kinematic viscosity at 37.78°C: $7.59 \times 10^{-5}$ m$^2$/s) was also injected into the extruder cylinder by a plunger pump. The operating conditions for the feeder and pump were adjusted for a liquid paraffin content of 68 parts by weight, i.e., a polymer concentration of 32 parts by weight, in the total mixture to be extruded.

The contents were then melt kneaded in the twin-screw extruder while heating to 160°C, the obtained melt kneaded mixture was extruded through a T-die onto a cooling roll controlled to a surface temperature of 80°C, and the extruded mixture was contacted with a cooling roll for casting and cooled to solidification to obtain a cast sheet. The sheet was then stretched under conditions with a factor of $7 \times 6.4$ and a temperature of 122°C using a simultaneous biaxial stretcher, and the stretched sheet was immersed in methylene chloride for extraction removal of the liquid paraffin and then dried and stretched by a factor of 1.85 in the transverse direction using a tenter stretcher at a temperature of 132°C. The stretched sheet was then relaxed to about 10% in the transverse direction and subjected to heat treatment to obtain polyolefin microporous membrane 1A.

The physical properties (membrane thickness, basis weight, porosity, air permeability and puncture strength) of the obtained polyolefin microporous membrane 1A were measured by the methods described above, as necessary.

(Production of polyolefin microporous membranes 2A and 3A)

Polyolefin microporous membranes 2A and 3A were obtained in the same manner as 1A, except that the production conditions were appropriately changed to adjust the physical properties (membrane thickness, basis weight, porosity, air permeability and puncture strength).

(Dot coating of thermoplastic polymer-containing layer on polyolefin microporous membrane)

A porous layer comprising inorganic particles and a resin binder was formed on one side of polyolefin microporous membrane 1A (porous layer thickness: 2 $\mu$m), after which both surfaces of the polyolefin microporous membrane 1A were dot coated with acrylic polymer 1 as the coating solution by gravure or inkjet printing under conditions with the dot pattern, coverage area ratio and basis weight per side shown in Table 1, and dried at 40°C to remove the water in the coating solution, thereby obtaining a separator for a power storage device having a thermoplastic polymer-containing layer on both sides of the polyolefin microporous membrane, in a dot pattern. Each obtained separator was evaluated by the methods described above. The results are shown in Table 1. Gravure coating is preferred from the viewpoint of obtaining an extent of dot irregularities of no greater than 70%, more preferably no greater than 50% and even more preferably no greater than 30% of the dot height. The extent of dot irregularities can be measured with a laser microscope (model OLS5000-SAF by Olympus Corp.).

<Examples 2 to 35 and Comparative Examples 1 to 23>

Separators for a power storage device each comprising a thermoplastic polymer-containing layer on both sides of a polyolefin microporous membrane were obtained in the same manner as Example 1, except that the conditions including the type of thermoplastic polymer, the dot pattern, the coverage area ratio and the basis weight were changed as shown in Table 1. Each obtained separator was evaluated by the methods described above. For the injection completion time, adhesive force and contact angle, the values for the sides with the longer injection completion times were used when measuring the injection completion time on each side of the separator by the method described above under <Injectability of electrolyte solution>. The results are shown in Table 1.

In Example 30, a porous layer comprising inorganic particles and a resin binder was formed on one side of polyolefin microporous membrane 1A (porous layer thickness: 4 $\mu$m), after which a thermoplastic polymer-containing layer was coated onto both sides of polyolefin microporous membrane 1A in a dot pattern under the conditions shown in Table 1, to obtain a separator having a symmetrical multilayer structure in terms of microporous membrane 1A.

In Example 31, a porous layer comprising inorganic particles and a resin binder was formed on one side of polyolefin microporous membrane 2A (porous layer thickness: 3 $\mu$m), after which a thermoplastic polymer-containing layer was coated onto both sides of polyolefin microporous membrane 1A in a dot pattern under the conditions shown in Table 1, to obtain a separator having a symmetrical multilayer structure in terms of polyolefin microporous membrane 1A.

In Example 32, a porous layer comprising inorganic particles and a resin binder was formed on both sides of polyolefin microporous membrane 2A (porous layer single-side thickness: 1.5 $\mu$m), after which a thermoplastic polymer-containing layer was coated onto both sides of polyolefin microporous membrane 2A in a dot pattern under the conditions shown in Table 1, to obtain a separator having a symmetrical multilayer structure in terms of polyolefin microporous membrane 2A. The injection completion time and adhesive force were measured for both the positive electrode and the negative electrode by the methods described above under <Adhesion to electrodes> and <Injectability of electrolyte solution>, and the values were used in combination for the electrode with the longer injection completion time.

In Example 33, a porous layer comprising inorganic particles and a resin binder was formed on one side of polyolefin microporous membrane 1A, after which a thermoplastic polymer-containing layer was coated onto both sides of polyolefin microporous membrane 1A in a dot pattern under the conditions shown below, to obtain a separator having an asymmetrical multilayer structure in terms of polyolefin microporous membrane 1A.

• Side of porous layer comprising inorganic particles and resin binder

Dot diameter: 200 $\mu$m, dot distance: 125 $\mu$, dot distance/dot diameter: 0.6, dot height: 1 $\mu$m, total area coverage of thermoplastic polymer-containing layer: 50%, thermoplastic polymer-containing layer single-side basis weight: 0.2 g/m$^2$

• Polyolefin substrate side

Dot diameter: 200 $\mu$m, dot distance: 420 $\mu$m, dot distance/dot diameter: 2.1, dot height: 1 $\mu$m, total area coverage of thermoplastic polymer-containing layer: 12%, thermoplastic polymer-containing layer single-side basis weight: 0.06 g/m$^2$

For the injection completion time, adhesive force and contact angle, the values for the sides with the longer times were used when measuring the injection completion time on each side of the separator by the method described above under <Injectability of electrolyte solutions

In Example 34, a porous layer comprising inorganic particles and a resin binder was formed on one side of polyolefin microporous membrane 3A, after which a thermoplastic polymer-containing layer was coated onto both sides of polyolefin microporous membrane 3A in a dot pattern under the conditions shown in Table 1, to obtain a separator having an asymmetrical multilayer structure in terms of polyolefin microporous membrane 3A.

For Comparative Examples 10 and 11, the total coverage area ratio of the thermoplastic polymer-containing layers are shown as 90% in Table 1, but the porous layer comprising inorganic particles and a resin binder was formed on polyolefin microporous membrane 1A, after which acrylic polymer 1 and PVDF were each coated over the entire surface.

For Comparative Example 12, a separator was obtained by the method described in Example 12B of International Patent Publication No. WO2014/017651 (PTL 1), and was subjected to the measurement and evaluation described above.

For Comparative Example 19, a separator was obtained by the method described in Example 1 of Japanese Patent No. 7103760, and was subjected to the measurement and evaluation described above.

For Comparative Example 21, a separator was obtained by the method described in Example 7A of Japanese Patent No. 6688006, and was subjected to the measurement and evaluation described above.

[Table 1-1]

|  | | Example | | | | |
|---|---|---|---|---|---|---|
|  | | 1 | 2 | 3 | 4 | 5 |
|  | Dot diameter ($\mu$m) | 50 | 100 | 150 | 200 | 200 |
|  | Dot distance ($\mu$m) | 150 | 180 | 380 | 100 | 125 |
|  | Dot distance/dot diameter | 3.0 | 1.8 | 2.5 | 0.5 | 0.6 |
|  | Dot height ($\mu$m) | 1 | 1 | 1 | 0.5 | 0.5 |
|  | Total coverage area ratio of thermoplastic polymer (%) | 8 | 16 | 10 | 55 | 50 |
|  | Basis weight of thermoplastic polymer-containing layer per side (g/m$^2$) | 0.04 | 0.08 | 0.05 | 0.12 | 0.10 |
|  | Thermoplastic polymer type | Acrylic polymer 1 | Acrylic polymer 1 | Acrylic polymer 1 | Acrylic polymer 1 | Acrylic polymer 1 |
|  | Mean particle diameter of thermoplastic polymer ($\mu$m) | 0.5 | 0.5 | 0.5 | 0.5 | 0.5 |
|  | Porous layer thickness including inorganic particles and resin binder ($\mu$m) | 2 | 2 | 2 | 2 | 2 |
|  | Polyolefin microporous membrane thickness ($\mu$m) | 12 | 12 | 12 | 12 | 12 |
|  | Polyolefin microporous membrane basis weight (g/m$^2$) | 6.4 | 6.4 | 6.4 | 6.4 | 6.4 |
|  | Polyolefin microporous membrane porosity (%) | 46 | 46 | 46 | 46 | 46 |
|  | Intensity of corona treatment (1 W/(m$^2$/min)) | 4 | 4 | 4 | 4 | 4 |
|  | Drying speed (g/(m$^2$·s)) | 0.09 | 0.09 | 0.09 | 0.09 | 0.09 |
|  | Coating material viscosity (mPa·s) | 40 | 40 | 40 | 40 | 40 |
|  | Coating material pH | 7.9 | 7.9 | 7.9 | 7.9 | 7.9 |

(continued)

| | Example | | | | |
|---|---|---|---|---|---|
| | 1 | 2 | 3 | 4 | 5 |
| Contact angle (°) | 18.0 | 13.6 | 15.1 | 11.8 | 12.9 |
| Injection completion time (min) | 20 | 19 | 13 | 20 | 19 |
| Adhesive force (N/m) | 2.1 | 2.7 | 2.0 | 3.4 | 3.1 |

[Table 1-2]

| | Example | | | | |
|---|---|---|---|---|---|
| | 6 | 7 | 8 | 9 | 10 |
| Dot diameter ($\mu$m) | 200 | 200 | 200 | 200 | 200 |
| Dot distance ($\mu$m) | 420 | 125 | 155 | 200 | 300 |
| Dot distance/dot diameter | 2.1 | 0.6 | 0.8 | 1.0 | 1.5 |
| Dot height ($\mu$m) | 0.5 | 1 | 1 | 1 | 1 |
| Total coverage area ratio of thermoplastic polymer (%) | 12 | 50 | 40 | 30 | 20 |
| Basis weight of thermoplastic polymer-containing layer per side (g/m$^2$) | 0.03 | 0.30 | 0.20 | 0.15 | 0.10 |
| Thermoplastic polymer type | Acrylic polymer 1 | Acrylic polymer 1 | Acrylic polymer 1 | Acrylic polymer 1 | Acrylic polymer 1 |
| Mean particle diameter of thermoplastic polymer ($\mu$m) | 0.5 | 0.5 | 0.5 | 0.5 | 0.5 |
| Porous layer thickness including inorganic particles and resin binder ($\mu$m) | 2 | 2 | 2 | 2 | 2 |
| Polyolefin microporous membrane thickness ($\mu$m) | 12 | 12 | 12 | 12 | 12 |
| Polyolefin microporous membrane basis weight (g/m$^2$) | 6.4 | 6.4 | 6.4 | 6.4 | 6.4 |
| Polyolefin microporous membrane porosity (%) | 46 | 46 | 46 | 46 | 46 |
| Intensity of corona treatment (1 W/(m$^2$/min)) | 4 | 4 | 4 | 4 | 4 |
| Drying speed (g/(m$^2$·s)) | 0.09 | 0.09 | 0.09 | 0.09 | 0.09 |
| Coating material viscosity (mPa·s) | 40 | 40 | 40 | 40 | 40 |
| Coating material pH | 7.9 | 7.9 | 7.9 | 7.9 | 7.9 |
| Contact angle (°) | 14.0 | 12.6 | 12.8 | 13.1 | 13.5 |
| Injection completion time (min) | 17 | 18 | 17 | 17 | 16 |
| Adhesive force (N/m) | 2.0 | 6.5 | 5.5 | 4.3 | 3.2 |

[Table 1-3]

| | Example | | | | |
|---|---|---|---|---|---|
| | 11 | 12 | 13 | 14 | 15 |
| Dot diameter ($\mu$m) | 200 | 200 | 200 | 200 | 200 |
| Dot distance ($\mu$m) | 420 | 420 | 501 | 650 | 650 |
| Dot distance/dot diameter | 2.1 | 2.1 | 2.5 | 3.3 | 3.3 |
| Dot height ($\mu$m) | 1 | 1 | 1 | 1.5 | 1.5 |
| Total coverage area ratio of thermoplastic polymer (%) | 12 | 12 | 10 | 7.5 | 7.5 |
| Basis weight of thermoplastic polymer-containing layer per side (g/m$^2$) | 0.06 | 0.06 | 0.06 | 0.05 | 0.05 |
| Thermoplastic polymer type | Acrylic polymer 1 | Acrylic polymer 2 | Acrylic polymer 1 | Acrylic polymer 1 | Acrylic polymer 2 |
| Mean particle diameter of thermoplastic polymer ($\mu$m) | 0.5 | 0.5 | 0.5 | 0.5 | 0.5 |
| Porous layer thickness including inorganic particles and resin binder ($\mu$m) | 2 | 2 | 2 | 2 | 2 |
| Polyolefin microporous membrane thickness ($\mu$m) | 12 | 12 | 12 | 12 | 12 |
| Polyolefin microporous membrane basis weight (g/m$^2$) | 6.4 | 6.4 | 6.4 | 6.4 | 6.4 |
| Polyolefin microporous membrane porosity (%) | 46 | 46 | 46 | 46 | 46 |
| Intensity of corona treatment (1 W/(m$^2$/min)) | 4 | 4 | 4 | 4 | 4 |
| Drying speed (g/(m$^2\cdot$s)) | 0.09 | 0.09 | 0.09 | 0.09 | 0.09 |
| Coating material viscosity (mPa·s) | 40 | 40 | 40 | 40 | 40 |
| Coating material pH | 7.9 | 7.2 | 7.9 | 7.9 | 7.2 |
| Contact angle (°) | 13.8 | 10.5 | 15.4 | 18.0 | 14.7 |
| Injection completion time (min) | 15 | 13 | 11 | 9 | 8 |
| Adhesive force (N/m) | 2.6 | 2.8 | 2.5 | 2.2 | 2.1 |

[Table 1-4]

| | Example | | | | |
|---|---|---|---|---|---|
| | 16 | 17 | 18 | 19 | 20 |
| Dot diameter ($\mu$m) | 200 | 200 | 300 | 400 | 400 |
| Dot distance ($\mu$m) | 800 | 800 | 640 | 800 | 800 |
| Dot distance/dot diameter | 4.0 | 4.0 | 2.1 | 2.0 | 2.0 |
| Dot height ($\mu$m) | 2 | 2 | 1 | 1 | 1 |
| Total coverage area ratio of thermoplastic polymer (%) | 5 | 5 | 12 | 12 | 12 |

(continued)

| | Example | | | | |
|---|---|---|---|---|---|
| | 16 | 17 | 18 | 19 | 20 |
| Basis weight of thermoplastic polymer-containing layer per side (g/m²) | 0.04 | 0.04 | 0.06 | 0.06 | 0.06 |
| Thermoplastic polymer type | Acrylic polymer 1 | Acrylic polymer 1 | Acrylic polymer 1 | Acrylic polymer 1 | Acrylic polymer 1 |
| Mean particle diameter of thermoplastic polymer (μm) | 0.5 | 0.5 | 0.5 | 0.5 | 0.5 |
| Porous layer thickness including inorganic particles and resin binder (μm) | 2 | 2 | 2 | 2 | 2 |
| Polyolefin microporous membrane thickness (μm) | 12 | 12 | 12 | 12 | 12 |
| Polyolefin microporous membrane basis weight (g/m²) | 6.4 | 6.4 | 6.4 | 6.4 | 6.4 |
| Polyolefin microporous membrane porosity (%) | 46 | 46 | 46 | 46 | 46 |
| Intensity of corona treatment (1 W/(m²/min)) | 4 | 4 | 4 | 4 | 10 |
| Drying speed (g/(m²·s)) | 0.09 | 0.2 | 0.09 | 0.09 | 0.09 |
| Coating material viscosity (mPa·s) | 40 | 40 | 40 | 40 | 40 |
| Coating material pH | 7.9 | 7.9 | 7.9 | 7.9 | 7.9 |
| Contact angle (°) | 18.6 | 18.0 | 14.0 | 14.3 | 12.1 |
| Injection completion time (min) | 9 | 8 | 8 | 9 | 7 |
| Adhesive force (N/m) | 2.0 | 2.1 | 2.4 | 2.5 | 2.8 |

[Table 1-5]

| | Example | | | | |
|---|---|---|---|---|---|
| | 21 | 22 | 23 | 24 | 25 |
| Dot diameter (μm) | 400 | 600 | 200 | 400 | 600 |
| Dot distance (μm) | 1380 | 1300 | 420 | 1180 | 1910 |
| Dot distance/dot diameter | 3.5 | 2.2 | 2.1 | 3.0 | 3.2 |
| Dot height (μm) | 2 | 1 | 2 | 2 | 2 |
| Total coverage area ratio of thermoplastic polymer (%) | 6.5 | 12 | 12 | 8 | 7 |
| Basis weight of thermoplastic polymer-containing layer per side (g/m²) | 0.05 | 0.06 | 0.12 | 0.08 | 0.07 |
| Thermoplastic polymer type | Acrylic polymer 1 | Acrylic polymer 1 | Acrylic polymer 1 | Acrylic polymer 1 | Acrylic polymer 1 |
| Mean particle diameter of thermoplastic polymer (μm) | 0.5 | 0.5 | 0.5 | 0.5 | 0.5 |

(continued)

| | Example | | | | |
|---|---|---|---|---|---|
| | 21 | 22 | 23 | 24 | 25 |
| Porous layer thickness including inorganic particles and resin binder ($\mu$m) | 2 | 2 | 2 | 2 | 2 |
| Polyolefin microporous membrane thickness ($\mu$m) | 12 | 12 | 12 | 12 | 12 |
| Polyolefin microporous membrane basis weight (g/m$^2$) | 6.4 | 6.4 | 6.4 | 6.4 | 6.4 |
| Polyolefin microporous membrane porosity (%) | 46 | 46 | 46 | 46 | 46 |
| Intensity of corona treatment (1 W/(m$^2$/min)) | 4 | 4 | 4 | 4 | 4 |
| Drying speed (g/(m$^2$·s)) | 0.09 | 0.09 | 0.09 | 0.09 | 0.09 |
| Coating material viscosity (mPa·s) | 40 | 40 | 40 | 40 | 40 |
| Coating material pH | 7.9 | 7.9 | 7.9 | 7.9 | 7.9 |
| Contact angle (°) | 18.2 | 14.4 | 13.7 | 17.3 | 17.9 |
| Injection completion time (min) | 9 | 7 | 13 | 8 | 8 |
| Adhesive force (N/m) | 2.5 | 3.0 | 5.1 | 2.5 | 2.3 |

[Table 1-6]

| | Example | | | | |
|---|---|---|---|---|---|
| | 26 | 27 | 28 | 29 | 30 |
| Dot diameter ($\mu$m) | 600 | 700 | 800 | 1000 | 200 |
| Dot distance ($\mu$m) | 1910 | 2450 | 2800 | 3000 | 420 |
| Dot distance/dot diameter | 3.2 | 3.5 | 3.5 | 3.0 | 2.1 |
| Dot height ($\mu$m) | 2 | 2 | 2 | 1 | 1 |
| Total coverage area ratio of thermoplastic polymer (%) | 7 | 6 | 6 | 8 | 12 |
| Basis weight of thermoplastic polymer-containing layer per side (g/m$^2$) | 0.07 | 0.05 | 0.05 | 0.04 | 0.06 |
| Thermoplastic polymer type | Acrylic polymer 1 | Acrylic polymer 1 | Acrylic polymer 1 | Acrylic polymer 1 | Acrylic polymer 1 |
| Mean particle diameter of thermoplastic polymer ($\mu$m) | 0.5 | 0.5 | 0.5 | 0.5 | 0.5 |
| Porous layer thickness including inorganic particles and resin binder ($\mu$m) | 2 | 2 | 2 | 2 | 4 |
| Polyolefin microporous membrane thickness ($\mu$m) | 12 | 12 | 12 | 12 | 12 |
| Polyolefin microporous membrane basis weight (g/m$^2$) | 6.4 | 6.4 | 6.4 | 6.4 | 6.4 |

(continued)

| | Example | | | | |
|---|---|---|---|---|---|
| | 26 | 27 | 28 | 29 | 30 |
| Polyolefin microporous membrane porosity (%) | 46 | 46 | 46 | 46 | 46 |
| Intensity of corona treatment (1 W/(m$^2$/min)) | 4 | 4 | 4 | 4 | 4 |
| Drying speed (g/(m$^2$·s)) | 0.09 | 0.09 | 0.09 | 0.09 | 0.09 |
| Coating material viscosity (mPa·s) | 60 | 40 | 40 | 40 | 40 |
| Coating material pH | 7.9 | 7.9 | 7.9 | 7.9 | 7.9 |
| Contact angle (°) | 16.8 | 19.2 | 19.5 | 18.0 | 13.8 |
| Injection completion time (min) | 7 | 9 | 11 | 12 | 20 |
| Adhesive force (N/m) | 2.5 | 2.5 | 2.5 | 2.1 | 2.0 |

[Table 1-7]

| | Example | | | | |
|---|---|---|---|---|---|
| | 31 | 32 | 33 | 34 | 35 |
| Dot diameter (μm) | 200 | 200 | 200 | 200 | 200 |
| Dot distance (μm) | 260 | 260 | 420 | 200 | 125 |
| Dot distance/dot diameter | 1.3 | 1.3 | 2.1 | 1.0 | 0.6 |
| Dot height (μm) | 1.5 | 1.5 | 1 | 1 | 1 |
| Total coverage area ratio of thermoplastic polymer (%) | 25 | 25 | 12 | 30 | 30 |
| Basis weight of thermoplastic polymer-containing layer per side (g/m$^2$) | 0.10 | 0.10 | 0.06 | 0.15 | 0.30 |
| Thermoplastic polymer type | Acrylic polymer 3 | Acrylic polymer 3 | Acrylic polymer 1 | Acrylic polymer 3 | PVDF |
| Mean particle diameter of thermoplastic polymer (μm) | 0.55 | 0.55 | 0.5 | 0.55 | 0.2 |
| Porous layer thickness including inorganic particles and resin binder (μm) | 3.0 | 3.0 | 2 | 1.5 | 2 |
| Polyolefin microporous membrane thickness (μm) | 9 | 9 | 12 | 6 | 12 |
| Polyolefin microporous membrane basis weight (g/m$^2$) | 4.7 | 4.7 | 6.4 | 3.3 | 6.4 |
| Polyolefin microporous membrane porosity (%) | 45 | 45 | 46 | 42 | 46 |
| Intensity of corona treatment (1 W/(m$^2$/min)) | 4 | 4 | 4 | 4 | 4 |
| Drying speed (g/(m$^2$·s)) | 0.09 | 0.09 | 0.09 | 0.09 | 0.09 |
| Coating material viscosity (mPa·s) | 60 | 60 | 40 | 40 | 40 |
| Coating material pH | 7.9 | 7.9 | 7.9 | 7.9 | 7.9 |

(continued)

| | Example | | | | |
|---|---|---|---|---|---|
| | **31** | **32** | **33** | **34** | **35** |
| Contact angle (°) | 13.2 | 4.3 | 13.8 | 13.3 | 12.4 |
| Injection completion time (min) | 12 | 11 | 15 | 10 | 20 |
| Adhesive force (N/m) | 3.0 | 2.4 | 2.6 | 4.1 | 2.0 |

[Table 1-8]

| | Comparative Example | | | | |
|---|---|---|---|---|---|
| | **1** | **2** | **3** | **4** | **5** |
| Dot diameter ($\mu$m) | 50 | 100 | 200 | 200 | 200 |
| Dot distance ($\mu$m) | 230 | 40 | 50 | 80 | 1060 |
| Dot distance/dot diameter | 4.6 | 0.4 | 0.3 | 0.4 | 5.3 |
| Dot height ($\mu$m) | 1 | 1 | 1 | 1 | 1 |
| Total coverage area ratio of thermoplastic polymer (%) | 4 | 60 | 80 | 65 | 3 |
| Basis weight of thermoplastic polymer-containing layer per side ($g/m^2$) | 0.02 | 0.20 | 0.30 | 0.20 | 0.02 |
| Thermoplastic polymer type | Acrylic polymer 1 | Acrylic polymer 1 | Acrylic polymer 1 | Acrylic polymer 1 | Acrylic polymer 1 |
| Mean particle diameter of thermoplastic polymer ($\mu$m) | 0.5 | 0.5 | 0.5 | 0.5 | 0.5 |
| Porous layer thickness including inorganic particles and resin binder ($\mu$m) | 2 | 2 | 2 | 2 | 2 |
| Polyolefin microporous membrane thickness ($\mu$m) | 12 | 12 | 12 | 12 | 12 |
| Polyolefin microporous membrane basis weight ($g/m^2$) | 6.4 | 6.4 | 6.4 | 6.4 | 6.4 |
| Polyolefin microporous membrane porosity (%) | 46 | 46 | 46 | 46 | 46 |
| Intensity of corona treatment (1 W/($m^2$/min)) | 4 | 4 | 4 | 4 | 4 |
| Drying speed (g/($m^2$·s)) | 0.09 | 0.09 | 0.09 | 0.09 | 0.09 |
| Coating material viscosity (mPa·s) | 40 | 40 | 40 | 40 | 40 |
| Coating material pH | 7.9 | 7.9 | 7.9 | 7.9 | 7.9 |
| Contact angle (°) | 22.8 | 8.5 | 9.2 | 10.2 | 24.0 |
| Injection completion time (min) | 21 | 25 | 24 | 21 | 16 |
| Adhesive force (N/m) | 0.6 | 6.0 | 10.0 | 8.0 | 0.9 |

[Table 1-9]

| | Comparative Example | | | | |
|---|---|---|---|---|---|
| | **6** | **7** | 8 | **9** | **10** |
| Dot diameter ($\mu$m) | 400 | 600 | 400 | 600 | - |
| Dot distance ($\mu$m) | 1850 | 2800 | 90 | 90 | - |
| Dot distance/dot diameter | 4.6 | 4.7 | 0.2 | 0.2 | - |
| Dot height ($\mu$m) | 1 | 1 | 1 | 1 | - |
| Total coverage area ratio of thermoplastic polymer (%) | 4 | 4 | 80 | 90 | 90 |
| Basis weight of thermoplastic polymer-containing layer per side (g/m$^2$) | 0.02 | 0.02 | 0.40 | 0.40 | 0.20 |
| Thermoplastic polymer type | Acrylic polymer 1 | Acrylic polymer 1 | Acrylic polymer 1 | Acrylic polymer 1 | Acrylic polymer 1 |
| Mean particle diameter of thermoplastic polymer ($\mu$m) | 0.5 | 0.5 | 0.5 | 0.5 | 0.5 |
| Porous layer thickness including inorganic particles and resin binder ($\mu$m) | 2 | 2 | 2 | 2 | 2 |
| Polyolefin microporous membrane thickness ($\mu$m) | 12 | 12 | 12 | 12 | 12 |
| Polyolefin microporous membrane basis weight (g/m$^2$) | 6.4 | 6.4 | 6.4 | 6.4 | 6.4 |
| Polyolefin microporous membrane porosity (%) | 46 | 46 | 46 | 46 | 46 |
| Intensity of corona treatment (1 W/(m$^2$/min)) | 4 | 4 | 4 | 4 | 4 |
| Drying speed (g/(m$^2$·s)) | 0.09 | 0.09 | 0.09 | 0.09 | 0.09 |
| Coating material viscosity (mPa·s) | 40 | 40 | 40 | 40 | 40 |
| Coating material pH | 7.9 | 7.9 | 7.9 | 7.9 | 7.9 |
| Contact angle (°) | 23.3 | 23.8 | 7.2 | 6.8 | 6.7 |
| Injection completion time (min) | 14 | 13 | 22 | 23 | 30 |
| Adhesive force (N/m) | 0.8 | 0.7 | 13.0 | 15.0 | 10.0 |

[Table 1-10]

| | Comparative Example | | | | |
|---|---|---|---|---|---|
| | **11** | **12** | **13** | **14** | **15** |
| Dot diameter ($\mu$m) | - | 500 | 200 | 200 | 200 |
| Dot distance ($\mu$m) | - | 311 | 800 | 650 | 650 |
| Dot distance/dot diameter | - | 0.62 | 4.0 | 3.3 | 3.3 |
| Dot height ($\mu$m) | - | 0.5 | 2 | 1.5 | 1.5 |
| Total coverage area ratio of thermoplastic polymer (%) | 90 | 30 | 5 | 7.5 | 7.5 |

(continued)

|  | Comparative Example | | | | |
|---|---|---|---|---|---|
|  | 11 | 12 | 13 | 14 | 15 |
| Basis weight of thermoplastic polymer-containing layer per side (g/m²) | 0.5 | 0.2 | 0.04 | 0.05 | 0.05 |
| Thermoplastic polymer type | PVDF | Control acrylic polymer 1 | Acrylic polymer 1 | Acrylic polymer 1 | Acrylic polymer 1 |
| Mean particle diameter of thermoplastic polymer (μm) | 0.2 | 0.5 | 0.5 | 0.5 | 0.5 |
| Porous layer thickness including inorganic particles and resin binder (μm) | 2 | - | 2 | 2 | 2 |
| Polyolefin microporous membrane thickness (μm) | 12 | 12 | 12 | 12 | 12 |
| Polyolefin microporous membrane basis weight (g/m²) | 6.4 | 7.4 | 6.4 | 6.4 | 6.4 |
| Polyolefin microporous membrane porosity (%) | 46 | 36 | 46 | 46 | 46 |
| Intensity of corona treatment (1 W/(m²/min)) | 4 | 4 | 0.4 | 4 | 4 |
| Drying speed (g/(m²·s)) | 0.09 | 0.09 | 0.09 | 0.02 | 0.09 |
| Coating material viscosity (mPa·s) | 40 | 40 | 40 | 40 | 20 |
| Coating material pH | 7.9 | 9.0 | 7.9 | 7.9 | 7.2 |
| Contact angle (°) | 7.5 | 20.5 | 24.0 | 22.0 | 23.5 |
| Injection completion time (min) | 31 | 21 | 22 | 23 | 25 |
| Adhesive force (N/m) | 4.0 | 5.6 | 2.0 | 2.0 | 2.0 |

[Table 1-11]

|  | Comparative Example | | | | |
|---|---|---|---|---|---|
|  | 16 | 17 | 18 | 19 | 20 |
| Dot diameter (μm) | 200 | 220 | 220 | 250 | 250 |
| Dot distance (μm) | 650 | 150 | 200 | 300 | 150 |
| Dot distance/dot diameter | 3.3 | 0.7 | 0.9 | 1.2 | 0.6 |
| Dot height (μm) | 1.5 | 1 | 1 | 1 | 1 |
| Total coverage area ratio of thermoplastic polymer (%) | 7.5 | 27 | 22 | 20 | 46 |
| Basis weight of thermoplastic polymer-containing layer per side (g/m²) | 0.05 | 0.13 | 0.11 | 0.10 | 0.25 |
| Thermoplastic polymer type | Acrylic polymer 1 | SBR | SBR | Control acrylic polymer 2 | Acrylic polymer 4 |
| Mean particle diameter of thermoplastic polymer (μm) | 0.5 | 0.15 | 0.15 | 0.54 | 0.12 |
| Porous layer thickness per side including inorganic particles and resin binder (μm) | 2 | 4 | 4 | 2 | - |

(continued)

| | Comparative Example | | | | |
|---|---|---|---|---|---|
| | 16 | 17 | 18 | 19 | 20 |
| Polyolefin microporous membrane thickness (μm) | 12 | 12 | 12 | 25 | 18 |
| Polyolefin microporous membrane basis weight (g/m²) | 6.4 | 6.4 | 6.4 | - | - |
| Polyolefin microporous membrane porosity (%) | 46 | 46 | 46 | 55 | 45 |
| Intensity of corona treatment (1 W/(m²/min)) | 4 | 4 | 4 | 0.4 | - |
| Drying speed (g/(m²·s)) | 0.09 | 0.01 | 0.01 | 0.09 | 0.09 |
| Coating material viscosity (mPa·s) | 40 | 5 | 5 | 20 | 100 |
| Coating material pH | 8.5 | 8.0 | 8.0 | 8.0 | 8.0 |
| Contact angle (°) | 22.4 | 26.2 | 26.7 | 22.8 | 26.0 |
| Injection completion time (min) | 24 | 28 | 28 | 32 | 30 |
| Adhesive force (N/m) | 2.0 | 3.8 | 3.5 | 2.5 | 6.2 |

[Table 1-12]

| | Comparative Example | | |
|---|---|---|---|
| | 21 | 22 | 23 |
| Dot diameter (μm) | 500 | 80 | 150 |
| Dot distance (μm) | 300 | 100/500 | 243 |
| Dot distance/dot diameter | 0.6 | 1.25/6.25 | 1.6 |
| Dot height (μm) | 0.5 | 1 | 0.8 |
| Total coverage area ratio of thermoplastic polymer (%) | 20 | 10 | 30 |
| Basis weight of thermoplastic polymer-containing layer per side (g/m²) | 0.06 | 0.02 | 0.35 |
| Thermoplastic polymer type | Control acrylic polymer 3 | Acrylic polymer 1 | PVDF |
| Mean particle diameter of thermoplastic polymer (μm) | 0.14 | - | 0.2 |
| Porous layer thickness including inorganic particles and resin binder (μm) | 2 | 2 | 2 |
| Polyolefin microporous membrane thickness (μm) | 12 | 20 | 12 |
| Polyolefin microporous membrane basis weight (g/m²) | 7.0 | - | 6.4 |
| Polyolefin microporous membrane porosity (%) | 40 | 46 | 46 |
| Intensity of corona treatment (1 W/(m²/min)) | 4 | 4 | - |
| Drying speed (g/(m²·s)) | 0.01 | 0.09 | 0.02 |
| Coating material viscosity (mPa·s) | 5 | 40 | 100 |
| Coating material pH | 9.0 | 7.9 | 9.0 |
| Contact angle (°) | 27.1 | 15.8 | 21.3 |
| Injection completion time (min) | 26 | 21 | 22 |
| Adhesive force (N/m) | 2.0 | 1.5 | 2.5 |

REFERENCE SIGNS LIST

a: Dot diameter

b: Dot distance

sp: Particle scattering region

X: Continuous thermoplastic polymer region

Y: Thermoplastic polymer-free region

MIC: Maximum inscribed circle

CC: Circumscribed circle

**Claims**

1. A separator for a power storage device comprising a substrate and a thermoplastic polymer-containing layer which is formed on the substrate surface of at least one side of the substrate and includes a thermoplastic polymer, wherein:

   the thermoplastic polymer-containing layer has a dot pattern,
   the dot diameter is 20 $\mu$m to 1,000 $\mu$m,
   the dot distance is 100 $\mu$m to 3,000 $\mu$m,
   the dot diameter and the dot distance satisfy the relationship represented by the following formula:

   Dot distance/dot diameter ratio = 0.5 to 4, and
   a contact angle between the thermoplastic polymer-containing layer and an electrolyte solution is 0° to 20°.

2. The separator for a power storage device according to claim 1, wherein the average dot height is 0.2 $\mu$m to 10 $\mu$m.

3. The separator for a power storage device according to claim 1 or 2, wherein a total coverage area ratio of the thermoplastic polymer-containing layer on the substrate surface is 5% to 55%.

4. The separator for a power storage device according to claim 1 or 2, wherein a basis weight per side of the thermoplastic polymer-containing layer is 0.03 g/m$^2$ to 0.3 g/m$^2$.

5. The separator for a power storage device according to claim 1 or 2, wherein a mean particle diameter of the thermoplastic polymer is 0.1 $\mu$m to 2.0 $\mu$m.

6. The separator for a power storage device according to claim 1 or 2, wherein the thermoplastic polymer has at least two glass transition temperatures, at least one of the glass transition temperatures being in the range of below 20°C, and at least one of the glass transition temperatures being in the range of 40°C to 110°C.

7. The separator for a power storage device according to claim 1 or 2, which has an asymmetrical multilayer structure in terms of the substrate.

8. The separator for a power storage device according to claim 1 or 2, wherein the thermoplastic polymer-containing layer is present on both sides of the substrate, and a porous layer comprising an inorganic filler and a resin binder is formed between one side of the substrate and the thermoplastic polymer-containing layer.

9. A power storage device comprising a positive electrode, a negative electrode, the separator for a power storage device according to claim 8, and a nonaqueous electrolyte solution, wherein the separator for a power storage device is disposed in such a manner that, in terms of the substrate, the side with the porous layer and the positive electrode face each other.

10. A power storage device comprising a positive electrode, a negative electrode, the separator for a power storage device according to claim 1 or 2, and a nonaqueous electrolyte solution.

## FIG. 1

(a)

(b)

# FIG. 2

(a)

(b)

(c)

(d)

(e)

(f)

(g)

## INTERNATIONAL SEARCH REPORT

International application No.

**PCT/JP2022/033624**

**A. CLASSIFICATION OF SUBJECT MATTER**

*H01M 50/489*(2021.01)i; *H01G 11/52*(2013.01)i; *H01M 50/414*(2021.01)i; *H01M 50/434*(2021.01)i;
*H01M 50/437*(2021.01)i; *H01M 50/443*(2021.01)i; *H01M 50/446*(2021.01)i; *H01M 50/449*(2021.01)i;
*H01M 50/451*(2021.01)i; *H01M 50/457*(2021.01)i; *H01M 50/463*(2021.01)i
FI: H01M50/489; H01M50/449; H01M50/463 A; H01M50/457; H01M50/446; H01M50/451; H01M50/434; H01M50/437;
H01G11/52; H01M50/414; H01M50/443 M; H01M50/443 B; H01M50/443 E

According to International Patent Classification (IPC) or to both national classification and IPC

**B. FIELDS SEARCHED**

Minimum documentation searched (classification system followed by classification symbols)

H01M50/489; H01G11/52; H01M50/414; H01M50/434; H01M50/437; H01M50/443; H01M50/446; H01M50/449;
H01M50/451; H01M50/457; H01M50/463

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-008884 A (ASAHI KASEI CORP) 17 January 2019 (2019-01-17)<br>entire text, all drawings | 1-10 |
| A | JP 2019-008882 A (ASAHI KASEI CORP) 17 January 2019 (2019-01-17)<br>entire text, all drawings | 1-10 |
| A | JP 2000-248095 A (ASAHI CHEM IND CO LTD) 12 September 2000 (2000-09-12)<br>entire text, all drawings | 1-10 |
| A | JP 2019-179698 A (ASAHI KASEI CORP) 17 October 2019 (2019-10-17)<br>entire text, all drawings | 1-10 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 November 2022** | **22 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/033624**

| Patent document cited in search report | | | Publication date (day/month/year) | Patent family member(s) | Publication date (day/month/year) |
|---|---|---|---|---|---|
| JP | 2019-008884 | A | 17 January 2019 | (Family: none) | |
| JP | 2019-008882 | A | 17 January 2019 | (Family: none) | |
| JP | 2000-248095 | A | 12 September 2000 | (Family: none) | |
| JP | 2019-179698 | A | 17 October 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014017651 A
- JP 2011512005 A
- WO 2020067208 A
- JP 2018535534 A
- JP 2015099777 A
- JP 2015099776 A
- JP 7103760 B
- JP 6688006 B

**Non-patent literature cited in the description**

- Polymer Handbook. Wiley-Interscience Publication